# EUROPÄISCHE PATENTSCHRIFT

(11) **EP 3 290 152 B1**
(45) Veröffentlichungstag und Bekanntmachung des Hinweises auf die Patenterteilung: **02.06.2021**
(21) Anmeldenummer: 17189062.7
(22) Anmeldetag: 01.09.2017
(51) Int. Cl.: B23Q 7/14, B65D 25/06, B65D 25/10

(54) **WERKSTÜCKTRÄGER**
WORKPIECE HOLDER
PORTE-PIECE

(30) Priorität: 02.09.2016 LU 93196
(43) Veröffentlichungstag der Anmeldung: 07.03.2018
(73) Patentinhaber: Hörnle, Stephan, 76185 Karlsruhe (DE)
(72) Erfinder: Hörnle, Stephan, 76185 Karlsruhe (DE)
(74) Vertreter: Hoffmann, Jürgen

(56) Entgegenhaltungen:
- EP-A1- 0 811 463
- EP-A1- 1 352 703
- US-A1- 2006 249 415
- US-A1- 2015 037 132

## Beschreibung

Die Erfindung betrifft einen Werkstückträger mit einem Basisteil und wenigstens einem Tragelement, wobei das Basisteil ein erstes Geradführungselement und ein von dem ersten Geradführungselement beabstandetes zweites Geradführungselement aufweist, und dass wenigstens ein erster Lagerbock vorhanden ist, der linear verschiebbar an dem ersten Geradführungselement angeordnet ist, und dass wenigstens ein zweiter Lagerbock vorhanden ist, der linear verschiebbar an dem zweiten Geradführungselement angeordnet ist.

Werkstückträger dienen insbesondere in industriellen Produktionsprozessen dazu, Werkstücke, wie beispielsweise Rohteile, Halbzeug oder fertige Produkte, zu lagern und zu transportieren. Insbesondere kommen Werkstückträger in Automationssystemen, wie beispielsweise Stapelzellen, zum Einsatz. Stapelzellen sind elektromechanische und mit einer Steuerungstechnik versehene Automationsgeräte, die, insbesondere stapelbare, Werkstückträger handhaben. Ihre Funktion besteht zumeist darin, die in den Werkstückträgern abgelegten Werkstücke zu entnehmen und einem weiteren Produktionsprozess zuzuführen und darin, Werkstücke nach einem Produktionsschritt in Werkstückträgern abzulegen. Zu diesem Zweck kann eine Stapelzelle insbesondere einen Industrieroboter mit entsprechender Greifertechnik beinhalten.

Zumeist sind die in Stapelzellen eingesetzten Werkstückträger derart beschaffen, dass deren Tragelemente, auf denen die Werkstücke aufliegen, starr und unveränderbar angeordnet sind. Derartige Werkstückträger können zumeist nur für einen ganz bestimmten Typ von Werkstücken verwendet werden. Diese Werkstückträger sind zumeist ganz speziell und gezielt für den bestimmten Typ von zu tragenden Werkstücken dimensioniert und ausgelegt. Sie finden üblicher Weise Anwendung in Produktionsprozessen, bei denen eine geringe Varianz an Werkstücktypen vorliegt und Werkstücke in großen Stückzahlen und großen Losgrößen hergestellt oder bearbeitet werden.

Für produktionstechnische Anwendungsfälle, in welchen eine hohe Varianz an Typen von Werkstücken vorliegt und bei denen in kleineren oder lediglich mittleren Losgrößen produziert wird, liegt die Problemstellung darin, dass für die Vielzahl an verschiedenen Werkstück-Typen eine entsprechend hohe Vielzahl an unterschiedlichen Werkstückträgern benötigt wird. Dies führt dazu, dass die Summe an insgesamt benötigten Werkstückträgern sehr groß ist, so dass der diesbezügliche Aufwand in einem schlechten Verhältnis zum erzielten Nutzen steht. Dies insbesondere auch im Hinblick darauf, dass eine große Vielzahl an unterschiedlichen Werkstückträgern einen erheblichen organisatorischen und logistischen Aufwand zum Beschaffen, Lagern und zum anwendungsspezifischen Bereitstellen bedingt.

Es gibt auch Werkstückträger, die einstellbar sind, so dass sie je nach Einstellung für unterschiedliche Typen von Werkstücken eingesetzt werden können.

Aus DE 602 05 214 T2 ist eine Anlage für automatische Produktionsstraßen und ein Werkstückträger bzw. eine Palette mit Tragelementen variabler Distanz zum Halten von Werkstücken unterschiedlicher Größe entlang diesen Straßen bekannt. Der Werkstückträger bzw. die Palette weist zwei parallele Referenzstangen und zwei Festlegungsbrücken, die im Wesentlichen orthogonal zu den Referenzstangen angeordnet sind, auf.

Aus DE 91 00971 ist ein Werkstückträger bekannt, der durch die Verstellbarkeit seinerTragelemente Werkstücke unterschiedlicher Größe in typenreiner oder gemischter Bestückung aufnehmen kann. Die Tragelemente weisen entweder feste Arretierungen durch Rastlöcher, Zahnstangen- bzw. Schubmodulteilungen oder eine freie Positionierbarkeit durch Klemmstücke bzw. Gewindestellelemente auf. Der Werkstückträger kann mit einer beliebigen Anzahl von Tragelementen bestückt werden, welche darüber hinaus auch noch mit unterschiedlichen, dem jeweiligen Zweck angepassten Aufnahmerastern versehen sein können.

Aus DE 20 2014 002 918 U1 ist ein Werkstückträgersystem zur Lagerung von Werkstücken mit wenigstens einem Basisteil und wenigstens einem Aufnahmemodul für Werkstücke, das über Befestigungsmittel lösbar am Basisteil befestigbar oder befestigt ist, bekannt. Das Werkstückträgersystem weist wenigstens zwei voneinander verschiedene Aufnahmemodule auf, wobei die Befestigungsmittel wenigstens ein am Basisteil befestigtes oder befestigbares Adapterelement umfassen, über das wahlweise das wenigstens eine oder das wenigstens eine davon verschiedene andere Aufnahmemodul oder voneinander verschiedene Aufnahmemodule gemeinsam am Basisteil befestigbar oder befestigt sind.

Aus US 2006/0249415 A1 ist ein Behälter mit linear verschiebbaren Trägerteilen bekannt. An den Trägerteilen sind Tragelemente aus einer flexiblen Materialbahn befestigt, in die Produkte gelegt werden können.

Die aus dem Stand der Technik bekannten, einstellbaren Werkstückträger haben den Nachteil, dass das Umpositionieren und/oder Tauschen der Tragelemente sehr aufwendig ist. Darüber hinaus sind die Möglichkeiten zur Anpassung an unterschiedliche Sorten von Werkstücken zumeist sehr begrenzt.

Es ist die Aufgabe der vorliegenden Erfindung, einen Werkstückträger anzugeben, der einfach und flexibel für eine Vielzahl unterschiedlicher Werkstücke einstellbar ist.

Die Aufgabe wird durch einen Werkstückträger nach Anspruch 1 gelöst.

Der erfindungsgemäße Werkstückträger hat den ganz besonderen Vorteil, dass er sehr flexibel auf unterschiedliche Anwendungssituationen eingestellt werden kann. Insbesondere hat der erfindungsgemäße Werkstückträger den besonderen Vorteil, dass die Tragelemente nicht zwingend parallel zueinander oder parallel zu einer der Außenkanten angeordnet sein müssen. Vielmehr können die Tragelemente in einem von 0 Grad oder von 90 Grad verschiedenen Winkel zueinander oder zu den Außenkanten des Werkstückträgers ausgerichtet werden.

Ein ganz besonderer Vorteil des erfindungsgemäßen Werkstückträgers liegt darin, dass es nicht erforderlich ist, den ersten Lagerbock und den zweiten Lagerbock, an denen das Tragelement jeweils befestigt ist, gleichzeitig zu verschieben. Vielmehr können der erste Lagerbock und der zweite Lagerbock auch zeitlich nacheinander entlang der Geradführungselemente verschoben werden, um die gewünschte Position und Ausrichtung des Tragelements einzustellen. Insbesondere hierdurch ist es in besonders vorteilhafter Weise ermöglicht, dass ein übergeordneten Automationsgerät, insbesondere ein Handhabungsautomat, wie beispielsweise ein Standard-Industrieroboter, die Einstellung eines Tragelements vornimmt, indem es nacheinander den ersten Lagerbock und den zweiten Lagerbock in die erforderliche Position verschiebt. Hierfür kann ein Handhabungsautomat vorteilhaft besonders einfach ausgebildet sein und benötigt insbesondere keinen komplizierten Greif- oder Manipulationsarm, um die Verschiebungen vornehmen zu können.
Dadurch, dass das Tragelement mit dem ersten Lagerbock beweglich, nämlich relativ zu dem ersten Geradführungselement schwenkbar, verbunden ist, wird erreicht, dass das Tragelement in unterschiedlichen Winkeln zu dem ersten Geradführungselement ausgerichtet werden kann. Analog wird dadurch, dass das Tragelement mit dem zweiten Lagerbock beweglich, nämlich relativ zu dem zweiten Geradführungselement schwenkbar, verbunden ist, erreicht, dass das Tragelement in unterschiedlichen Winkeln zu dem zweiten Geradführungselement ausgerichtet werden kann. Vorzugsweise ist die Schwenkebene, innerhalb der das Tragelement relativ zu den Geradführungselementen schwenkbar angeordnet ist, eine horizontale Ebene und/oder eine Ebene, die die Ebene ist, in der das erste und das zweite Geradführungselement angeordnet sind, und/oder die parallel zu der Ebene ausgerichtet ist, in der das erste und das zweite Geradführungselement angeordnet sind.

Bei einer besonderen Ausführung sind das erste Geradführungselement und das zweite Geradführungselement zueinander parallel angeordnet. Dies ist jedoch nicht zwingend erforderlich. Vielmehr können die Geradführungselemente auch entlang zweier Geraden angeordnet sein, die sich unter einem von 0 Grad verschiedenen Winkel schneiden oder zueinander windschief sind.

Insbesondere können das erste Geradführungselement und das zweite Geradführungselement an zwei gegenüberliegenden Rändern des Basisteils angeordnet sein.

Das Basisteil kann insbesondere eine rechteckige Grundfläche aufweisen. Insbesondere kann vorteilhaft vorgesehen sein, dass das Basisteil 4 von einem Boden des Basisteils hochragende Seitenwände aufweist. Der Boden und/oder die Seitenwände können insbesondere aus Metallblech gefertigt sein. Insbesondere kann vorteilhaft vorgesehen sein, dass der Boden und/oder die Seitenwände jeweils wenigstens einen Durchbruch aufweisen. Hierdurch kann insbesondere ein niedriges Gewicht erzielt werden.

Das Basisteil kann vorteilhaft, insbesondere im Hinblick auf eine Leichtbauweise einen Korb oder einen rechteckigen Rahmen aufweisen. Alternativ kann vorteilhaft auch vorgesehen sein, dass das Basisteil wenigstens teilweise durch eine Drahtstruktur, insbesondere mit sich kreuzenden Drahtriegeln, gebildet ist. Bei einer besonderen Ausführung weist das Basisteil einen Drahtkorb auf. Wie bereits erwähnt, kann das Basisteil vorteilhaft aus Blech und, insbesondere im Hinblick auf eine Leichtbauweise, aus gelochtem Blech hergestellt sein. Hierbei bietet sich insbesondere die Verwendung von Stahlblech oder von Aluminiumblech an.

Bei einer besonderen Ausführung weist das Basisteil an zwei einander gegenüberliegenden Rändern zwei Seitenabschnitte auf, wobei an einem ersten der Seitenabschnitte das erste Geradführungselement angeordnet ist und wobei an einem zweiten der Seitenabschnitte das zweite Geradführungselement angeordnet ist.

Das erste Geradführungselement und/oder das zweite Geradführungselement können vorteilhaft jeweils wenigstens eine Führungsschiene aufweisen. Die Führungsschiene kann insbesondere als Profilschiene ausgebildet sein. Bei einer ganz besonders stabilen und dennoch platzsparenden Ausführung weisen das erste Geradführungselement und/oder das zweite Geradführungselement jeweils zwei zueinander parallele Führungsschienen, die insbesondere als Profilschienen ausgebildet sein können, auf. Insbesondere kann vorteilhaft vorgesehen sein, dass die zueinander parallelen Führungsschienen an jeweils an einem Seitenabschnitt des Basisteils übereinander angeordnet sind.

Die Verwendung einer Profilschiene hat den besonderen Vorteil, dass der daran linear verschiebbar gehaltene Lagerbock besonders sicher und zuverlässig geführt werden kann. Hierzu kann der Lagerbock vorteilhaft ein zu dem Profil der Profilschiene komplementäres Gegenprofil aufweisen, wobei das Profil und das Gegenprofil vorzugsweise derart zusammenwirken, dass ein ungewolltes Drehen und/oder ein ungewolltes Lösen des Lagerbocks zuverlässig verhindert sind.

Bei einer ganz besonders vorteilhaften Ausführung ist das Tragelement mit dem ersten Lagerbock drehbeweglich, insbesondere ausschließlich drehbeweglich, verbunden, während es mit dem zweiten Lagerbock sowohl drehbeweglich, als auch linear verschiebbar verbunden ist. Auf diese Weise wird dem Umstand Rechnung getragen, dass sich der Abstand des ersten Lagerbocks zu dem zweiten Lagerbock bei einem sequenziellen Verstellen ohne Behinderung durch das an den Lagerböcken befestigte Tragelement verändern können muss.

Bei einer Ausführung, die besonders viel Raum für abzulegende Werkstücke bereitstellt, ist das Tragelement länglich ausgebildet und an einem Ende mit dem ersten Lagerbock drehbeweglich, insbesondere ausschließlich drehbeweglich, verbunden und an einem anderen Ende mit dem zweiten Lagerbock sowohl drehbeweglich, als auch in Richtung der Längserstreckungsachse des Tragelements verschiebbar verbunden.

Zur Realisierung der beschriebenen Anbindung des Tragelements an den ersten Lagerbock kann beispielsweise vorteilhaft vorgesehen sein, dass das Tragelement eine erste, insbesondere im Querschnitt kreisrunde, Öse aufweist, die drehbar auf einen, insbesondere lotrecht angeordneten und im Querschnitt kreisrunden, ersten Zapfen des ersten Lagerbocks aufgesteckt ist. Auf diese Weise ist eine robuste und zuverlässige Scharnierverbindung des Tragelement mit dem ersten Lagerbock hergestellt, wobei es dennoch in einfacher Weise möglich ist, das Tragelement von dem ersten Lagerbock zu trennen, wenn dies - beispielsweise für einen Austausch gegen ein anders artiges Tragelement - nötig sein sollte.

Alternativ oder zusätzlich kann vorteilhaft vorgesehen sein, dass das Tragelement eine zweite, insbesondere längliche Öse aufweist, die auf einen, insbesondere lotrecht ausgerichteten, zweiten Zapfen des zweiten Lagerbocks aufgesteckt ist. Auf diese Weise ist eine zuverlässige, jedoch beispielsweise für einen Austauschvorgang einfach wieder lösbarbare Scharnierverbindung geschaffen, die nach dem Prinzip einer Langlochführung einen Längenausgleich zwischen dem ersten und dem zweiten Lagerbock zulässt.

Es kann alternativ zur Anbindung des Tragelements an den ersten Lagerbock vorteilhaft vorgesehen sein, dass das Tragelement einen, insbesondere lotrecht ausgerichteten, ersten Zapfen aufweist, der in einer Ausnehmung des ersten Lagerbocks wenigstens drehbar gelagert ist. Analog kann, insbesondere zusätzlich, vorteilhaft vorgesehen sein, dass das Tragelement einen, insbesondere lotrecht ausgerichteten, zweiten Zapfen aufweist, der in einer Bohrung des wenigstens zweiten Lagerbocks drehbar gelagert ist. Zusätzlich kann vorteilhaft vorgesehen sein, dass die erste Ausnehmung oder die zweite Ausnehmung im Querschnitt länglich ausgebildet ist, so dass zusätzlich auch eine Linearverschiebbarkeit des Tragelements relativ zu einem der Lagerböcke ermöglicht ist.

Das Tragelement kann vorzugsweise wenigstens eine, insbesondere nach oben gerichtete, Mulde für ein zu tragendes Werkstück aufweisen. Eine solche Mulde kann beispielsweise dadurch realisiert sein, dass das Tragelement an seiner nach oben ausgerichteten Stirnseite gezackt oder gewellt ausgebildet ist, wobei die zwischen den Spitzen beziehungsweise Ausbuchtungen liegenden Einkerbungen beziehungsweise Einbuchtungen die Mulden bilden. Alternativ oder zusätzlich kann auch vorgesehen sein, dass das Tragelement wenigstens eine, insbesondere lotrecht ausgerichtete, Lochung oder eine Reihe von Lochungen ausweist. In eine Lochung kann beispielsweise direkt ein Werkstück aufgesteckt werden. Es ist auch möglich, Haltestifte in den Lochungen zu positionieren, die dann an einem aufzunehmenden Werkstück anliegen und dieses in Position halten oder auf die ein Werkstück aufgesteckt wird.

Bei einer besonderen Ausführung weist das Tragelement eine Haltekontur und wenigstens ein an der Haltekontur befestigbares Halteelement auf, an dem ein Werkstück direkt oder indirekt festlegbar ist. Das Haltelement kann beispielsweise einen Stift aufweisen, auf den ein Werkstück aufsteckbar ist. Insbesondere kann das Tragelement vorteilhaft so ausgebildet sein, dass an der Haltekontur mehrere Halteelemente festgelegt werden können.

Die Haltekontur kann sich insbesondere entlang der Längserstreckungsrichtung des Tragelementes erstrecken, wobei das Halteelement vorzugsweise stufenlos an einer beliebigen Stelle der Haltekontur befestigbar ist. Eine solche Ausführung ist besonders vielseitig einsetzbar.

Bei einer vorteilhaften Ausführung kann das Halteelement entlang der Haltekontur verschoben werden, bis die jeweils erforderliche Sollposition erreicht ist. Anschließend kann eine Fixiervorrichtung aktiviert werden, um das Halteelement zu fixieren. Die Fixiervorrichtung kann insbesondere in der Weise realisiert sein, dass das Halteelement eine Klemmvorrichtung aufweist, mittels der das Haltelement wieder lösbar an der Haltekontur fixierbar ist. Die Klemmvorrichtung kann beispielsweise einen Klemmkopf und einen Klemmschuh aufweisen, deren Abstand veränderbar ist, um das Halteelement innerhalb der Haltekontur, insbesondere form- und/oder reibschlüssig, zu fixieren. Es kann ein Betätigungsteil vorhanden sein, mittels dem der Abstand veränderbar ist. Beispielsweise kann vorteilhaft vorgesehen sein, dass der Abstand durch ein Rotieren des Betätigungsteils veränderbar ist.

Bei einer besonderen Ausführung ist das Tragelement in Leichtbauweise ausgeführt. Eine Leichtbauweise hat, insbesondere auch im Hinblick auf das Basisteil und/oder die Lagerböcke, den ganz besonderen Vorteil, dass im Hinblick auf ein oftmals limitiertes Gesamtgewicht des mit Werkstücken bestückten Werkstückträgers mehr Gewichtsladekapazität für die Werkstücke zur Verfügung steht.

Insbesondere, aber nicht nur, in Hinblick auf eine Leichtbauweise kann das Tragelement wenigstens teilweise aus Blech oder aus Stahlblech oder aus Aluminiumblech oder aus faserverstärktem Kunststoff oder aus kohlenfaserverstärktem Kunststoff hergestellt sein. Insbesondere kann das Tragelement wenigstens teilweise als Stanzblechteil hergestellt sein. Eine solche Herstellungsweise erlaubt zum einen eine Leichtbauweise und ist darüber hinaus besonders kostengünstig.

Bei einer besonderen Ausführung ist das Tragelement eine Drahtstruktur mit sich kreuzenden Drahtriegeln. Es kann alternativ auch vorgesehen sein, dass das Tragelement wenigstens teilweise durch einen Drahtkorb gebildet ist.

Bei einer ganz besonders vorteilhaften Ausführung ist der Werkstückträger dazu ausgebildet, von einem übergeordneten Automationsgerät, beispielsweise einem Handhabungsautomaten und/oder einem Standardindustrieroboter, mit den jeweils erforderlichen Tragelementen bestückt zu werden oder hinsichtlich der Positionierung der Lagerböcke eingestellt zu werden.

Bei einer vorteilhaften Ausführung weist der erste Lagerbock ein Ankoppelelement auf, das dazu ausgebildet und bestimmt ist, für einen Verstellvorgang, bei dem der erste Lagerbock entlang dem ersten Geradführungselement verschoben wird, mit einem übergeordneten Automationsgerät in Wirkverbindung zu treten. Vorzugsweise weist auch der zweite Lagerbock ein solches Ankoppelelement auf.

Insbesondere kann das Ankoppelelement vorteilhaft dazu ausgebildet sein, formschlüssig mit einem übergeordneten Automationsgerät in Wirkverbindung zu treten. Hierzu kann das Ankoppelelement insbesondere als eine Bohrung, insbesondere lotrechte Bohrung, ausgebildet sein, in die ein Manipulationsfinger des übergeordneten Automationsgeräts für einen Verstellvorgang eingreifen kann. Eine kreisrunde Bohrung hat hierbei den besonderen Vorteil, dass ein einzuführender Manipulationsfehler sich bei einem Verstellvorgang frei in der Bohrung drehen kann, so dass der Verstellvorgang nicht behindert wird. Die, insbesondere lotrechte, Bohrung kann beispielsweise in dem Zapfen angeordnet sein, auf den eine Öse des Tragelements aufgesteckt ist.

Bei einer anderen Ausführung ist das Ankoppelelement dazu ausgebildet, per Magnetkraft mit einem übergeordneten Automationsgerät in Wirkverbindung zu treten. Hierzu kann das Ankoppelelement vorteilhaft einen Permanentmagneten aufweisen, der für einen Verstellvorgang in anziehender oder abstoßender Weise in Wirkverbindung mit einem Permanentmagneten des übergeordneten Automationssystems treten kann.

In ganz besonders vorteilhafter Weise kann vorgesehen sein, dass an dem ersten Geradführungselement mehrere, insbesondere gleiche, erste Lagerböcke linear verschiebbar angeordnet sind und dass an dem zweiten Geradführungselement mehrere, insbesondere gleiche, zweite Lagerböcke linear verschiebbar angeordnet sind. Entsprechend kann darüber hinaus vorteilhaft vorgesehen sein, dass mehrere Tragelemente vorhanden sind, wobei jedes Tragelement wenigstens mit einem der ersten Lagerböcke und mit wenigstens einem der zweiten Lagerböcke, insbesondere in der oben beschriebenen Weise, beweglich verbunden ist und/oder derart verbunden ist, dass der jeweils erste Lagerbock, mit dem es verbunden ist, und der wenigstens zweite Lagerbock, mit dem es verbunden ist, unabhängig voneinander linear verschiebbar sind.

Insbesondere kann auch vorgesehen sein, dass ein Tragelement gleichzeitig mit mehreren ersten Lagerböcken und/oder mit mehreren zweiten Lagerböcken, insbesondere in der oben beschriebenen Weise, verbunden ist.

Bei einer ganz besonders vorteilhaften Ausführung ist wenigstens eine Arretiervorrichtung vorhanden, mittels der die jeweils gerade eingestellte Verschiebestellung des wenigstens einen ersten Lagerbocks relativ zum ersten Gradführungselement und/oder die jeweils gerade eingestellte Verschiebestellung des wenigstens einen zweiten Lagerbocks relativ zum zweiten Geradführungselement, insbesondere wieder lösbar, arretierbar ist.

Die Arretiervorrichtung kann insbesondere eine erste Arretiereinheit aufweisen, die zum Arretieren der ersten Lagerböcke dient. Analog kann die Arretiervorrichtung eine zweite Arretiereinheit aufweisen, die dazu dient die zweiten Lagerböcke zu arretieren.

Insbesondere kann vorteilhaft vorgesehen sein, dass die Arretiervorrichtung eine erste Arretiereinheit und eine zweite Arretiereinheit aufweist, wobei mittels der ersten Arretiereinheit die jeweils gerade eingestellte Verschiebestellung des ersten Lagerbocks relativ zum ersten Geradführungselement, insbesondere wieder lösbar, arretierbar ist, und wobei mittels der zweiten Arretiereinheit die jeweils gerade eingestellte Verschiebestellung des zweiten Lagerbocks relativ zum zweiten Geradführungselement, insbesondere wieder lösbar, arretierbar ist. Im Hinblick auf eine Ausführung mit mehreren ersten Lagerböcken und mehreren zweiten Lagerböcken kann vorteilhaft vorgesehen sein, dass mittels der ersten Arretiereinheit die jeweils gerade eingestellten Verschiebestellungen mehrerer erster, insbesondere die Verschiebestellungen aller der ersten Lagerböcke, relativ zum ersten Geradführungselement arretierbar sind und dass mittels der zweiten Arretiereinheit die jeweils gerade eingestellten Verschiebestellungen mehrerer zweiter, insbesondere die Verschiebestellungen aller zweiten Lagerböcke, relativ zum zweiten Geradführungselement arretierbar sind.

Bei einer ganz besonders vorteilhaften Ausführung ist die Arretiervorrichtung derart ausgeführt, dass mit einer einzigen Arretierungsbetätigung gleichzeitig mehrere Lagerböcke arretierbar sind und/oder dass mit einer einzigen Freigabebetätigung gleichzeitig mehrere arretierte Lagerböcke freigebbar sind.

Insbesondere kann vorteilhaft vorgesehen sein, dass die Arretiervorrichtung eine erste Arretiereinheit aufweist, die es ermöglicht, mit einer einzigen Arretierungsbetätigung gleichzeitig sämtliche erste Lagerböcke zu arretieren beziehungsweise mit einer einzigen Freigabebetätigung gleichzeitig freizugeben. Analog kann vorteilhaft vorgesehen sein, dass die Arretierungsvorrichtung eine zweite Arretiereinheit aufweist, mit der durch eine einzige Arretierungsbetätigung gleichzeitig sämtliche zweiten Lagerböcke arretierbar sind und/oder bei der mit einer einzigen Freigabebetätigung gleichzeitig sämtliche arretierten zweiten Lagerböcke freigebbar sind.

Beispielsweise kann die erste Arretiereinheit ein erstes Betätigungselement aufweisen, um die Arretierungsbetätigung beziehungsweise die Freigabebetätigung ausführen zu können. Analog kann die zweite Arretiereinheit ein zweites Betätigungselement aufweisen. Vorzugsweise sind die Betätigungselemente dazu ausgebildet, von einem übergeordneten Automationsgerät, insbesondere einem Handhabungsautomaten, bedient zu werden.

Bei einer ganz besonders vorteilhaften Ausführung weist die Arretiervorrichtung einen drehbar gelagerten Profilstab auf, der ein von der Kreisform abweichenden Außenquerschnitt aufweist. Bei einer möglichen Ausführung verläuft der Profilstab durch einen Durchgang des Lagerbocks, wobei der Durchgang einen von der Kreisform abweichenden Innenquerschnitt aufweist. Für den Fall, dass mehrere Lagerböcke an einem Geradführungselement angeordnet sind kann vorteilhaft vorgesehen sein, dass der Profilstab durch die Durchgänge sämtlicher an diesem Geradführungselement gelagerter Lagerböcke verläuft. Vorzugsweise ist der Profilstab parallel zum Geradführungselement der zu arretierenden Lagerböcke und/oder parallel zu deren Verschieberichtung ausgerichtet.

Der Profilstab kann beispielsweise einen elliptischen Außenquerschnitt aufweisen, während der Durchgang, beziehungsweise die Durchgänge, einen elliptischen Innenquerschnitt aufweist bzw. aufweisen, wobei die Länge der kleinen Halbachse des Innenquerschnitts kleiner ist, als die Länge der großen Halbachse des Profilstabquerschnitts. Vorzugsweise verläuft die Mittelachse des Profilstabs konzentrisch durch den Durchbruch des Lagerbocks bzw. die Durchbrüche der Lagerböcke.

Wenn der Profilstab so ausgerichtet ist, dass im Querschnitt betrachtet seine große Halbachse parallel zur großen Hablachse des Innenquerschnitts der Lagerböcke ausgerichtet ist, können die Lagerböcke, durch die der Profilstab verläuft, frei entlang dem Profilstab verschoben werden. Wird der Profilstab jedoch um seine Mittelachse gedreht, legt sich seine Außenseite an die Innenseite der Durchgänge an, wodurch eine Arretierung durch Reibschluss und/oder durch Formschluss erzielt wird.

Zur Erzielung eines Formschlusses kann beispielsweise vorgesehen sein, dass der Profilstab auf seiner Außenseite mit einer elastischen Oberfläche versehen ist, in die sich ein Abschnitt der Innenseite des Durchgangs eindrücken kann, so dass zusätzlich zu einem Reibschluss auch ein Formschluss gebildet wird. Umgekehrt ist es natürlich auch möglich, dass die Innenseite des Durchgangs eine elastische Oberfläche aufweist, in die sich die Außenseite des Profilstabs eindrücken kann.

Ganz allgemein kann vorteilhaft vorgesehen sein, dass der Profilstab wahlweise in eine Arretierstellung, in der er reibschlüssig und/der formschlüssig arretierend mit dem zu arretierenden Lagerbock zusammenwirkt oder in eine Freigabestellung, in der er nicht arretierend mit dem Lagerbock zusammenwirkt, drehbar ist.

Beispielsweise kann auch vorgesehen sein, dass der Profilstab neben dem zu arretierenden Lagerbock angeordnet ist und dass der Profilstab in der Arretierstellung reibschlüssig und/oder formschlüssig arretierend an dem Lagerbock anliegt und in der Freigabestellung nicht an dem Lagerbock anliegt. Auch hierbei kann zur Erzielung eines Formschlusses vorgesehen sein, dass der Profilstab auf seiner Außenseite mit einer elastischen Oberfläche versehen ist, in die sich ein Abschnitt des Lagerbocks eindrücken kann, so dass zusätzlich zu einem Reibschluss auch ein Formschluss gebildet wird. Umgekehrt ist es natürlich auch möglich, dass der Lagerbock wenigstens in einem Abschnitt eine elastische Oberfläche aufweist, in die sich die Außenseite des Profilstabs eindrücken kann.

Bei einer besonderen Ausführung ist der Profilstab in einem Freiraum zwischen dem zu arretierenden Lagerbock, bzw. den zu arretierenden Lagerböcken, und dem Geradführungselement angeordnet. Dies kann vorteilhaft derart realisiert sein, dass der Profilstab in der Arretierstellung reibschlüssig und/oder formschlüssig arretierend an dem Lagerbock anliegt und sich dabei an dem Geradführungselement abstützt. Insbesondere kann hierbei vorgesehen sein, dass der Profilstab in der Freigabestellung weder an dem Lagerbock, noch an dem Geradführungselement anliegt.

An dem Profilstab kann, insbesondere stirnseitig ein Betätigungselement angeordnet sein. Insbesondere kann an dem Profilstab ein Betätigungselement angeordnet sein, das dazu ausgebildet und bestimmt ist, für einen Umschaltvorgang von der Freigabestellung in die Arretierstellung und/oder von der Arretierstellung in die Freigabestellung mit einem übergeordneten Automationsgerät in Wirkverbindung zu treten. Das Betätigungselement kann beispielsweise als Hebel oder als Nocken ausgebildet sein.

Bei einer anderen Ausführung weist die Arretiervorrichtung einen dehnbaren Schlauch auf, der zum Arretieren des Lagerbocks von innen mit einem erhöhten Gasdruck, insbesondere Luftdruck, beaufschlagbar ist, so dass er sich ausdehnt und den Lagerbock form- und/oder reibschlüssig arretiert. Insbesondere kann vorteilhaft vorgesehen sein, dass der Schlauch ein perforiertes Rohr beinhaltet, über das Gas, insbesondere Luft, in den Schlauch eingelassen bzw. aus dem Schlauch abgelassen werden kann. Besonders vorteilhaft ist eine Ausführung, bei der das Rohr durch die gesamte Länge des Schlauchs verläuft. Der Schlauch kann sich beispielsweise durch einen Durchgang eines des zu arretierenden Lagerbocks erstrecken, wobei der Außendurchmesser des Schlauchs, wenn er nicht mit einem erhöhten Gasdruck, insbesondere Luftdruck, beaufschlagt ist, kleiner ist als der Innendurchmesser des Durchgangs und wobei der sich Schlauch, wenn er mit einem erhöhten Gasdruck, insbesondere Luftdruck, beaufschlagt ist, an die Innenwände des Durchgangs reibschlüssig anlegt und/oder vor und hinter dem Durchgang einen Wulst erzeugt, der den Lagerbock formschlüssig arretiert.

Bei einer anderen Ausführung weist der erste Lagerbock, insbesondere jeder erste Lagerbock, eine eigene erste Arretierkomponente auf, die unabhängig von einer Arretierstellung anderer Arretierkomponenten anderer erster oder zweiter Lagerböcke wahlweise in eine Arretierstellung oder eine Freigabestellung überführbar ist. Hierbei kann insbesondere vorteilhaft vorgesehen sein, dass die erste Arretierkomponente in der Arretierstellung mit dem ersten Geradführungselement und/oder mit einem parallel zum ersten Geradführungselement verlaufenden Profilstab reibschlüssig und/oder formschlüssig zusammen wirkt.

Analog kann alternativ oder zusätzlich der zweite Lagerbock, insbesondere jeder zweite Lagerbock, eine eigene zweite Arretierkomponente aufweisen, die unabhängig von einer Arretierstellung anderer Arretierkomponenten anderer erster oder zweiter Lagerböcke wahlweise in eine Arretierstellung oder eine Freigabestellung überführbar ist. Auch hierbei kann insbesondere vorteilhaft vorgesehen sein, dass, die zweite Arretierkomponente in der Arretierstellung mit dem zweiten Geradführungselement und/oder mit einem parallel zum zweiten Geradführungselement verlaufenden Profilstab reibschlüssig und/oder formschlüssig zusammen wirkt.

Beispielsweise kann die Arretierkomponente ein Halteelement mit einem Durchbruch aufweisen, durch den ein Profilstab, der beispielsweise als Rundstab oder als Rundrohr ausgebildet sein kann, verläuft. Der Profilstab kann durch einen Durchgang in einem Grundkörper des Lagerbocks verlaufen oder neben einem Grundkörper des Lagerbocks angeordnet sein. Der Durchbruch des Haltelements ist länglich ausgebildet, wobei sich der Durchlassquerschnitt entlang der Längsrichtung des Durchbruchs verringert. In einem Endbereich des Durchbruchs ist der Durchlassquerschnitt größer als der Querschnitt des Profilstabes. Solange der Profilstab durch diesen Endbereich verläuft, befindet sich die Arretierkomponente in ihrer Freigabestellung, so dass der Lagerbock frei verschoben werden kann. Wird das Halteelement senkrecht zur Längserstreckungsrichtung des Profilstabes verschoben, treten die Stirnflächen des sich verjüngenden Durchbruchs reib- und/oder formschlüssig mit dem Profilstab in Wirkverbindung, wodurch die Arretierstellung herbeigeführt wird. In der Arretierstellung kann der Lagerbock nicht mehr frei verschoben werden.

Bei einer besonderen Ausführung weist die Arretierkomponente eine Feder auf, die das Haltelement in die Arretierstellung drängt. Entgegen der Rückstellkraft der Feder kann das Haltelement, beispielsweise von einem übergeordneten Automationsgerät, in die Freigabestellung bewegt werden, wenn der Lagerbock verschoben werden soll.

Bei einer ganz besonders robusten und kostengünstig herstellbaren Ausführung sind die Feder und das Halteelement gemeinsam einstückig hergestellt. Insbesondere können die Feder und das Halteelement gemeinsam einstückig aus einem gestanzten Federstahlblech gebogen sein. Vorzugsweise weist ein Grundkörper des Lagerbocks eine Führung auf, innerhalb der das Haltelement, insbesondere linear, bewegt werden kann. Außerdem kann der Grundkörper des Lagerbocks eine Aufnahme für die Feder aufweisen.

Wie bereits erwähnt kann der Lagerbock ein Ankoppelelement aufweisen, das dazu ausgebildet und bestimmt ist, für einen Verstellvorgang, bei dem der erste Lagerbock entlang dem ersten Geradführungselement verschoben wird, mit einem übergeordneten Automationsgerät in Wirkverbindung zu treten. Hierbei kann vorteilhaft vorgesehen sein, dass die Arretierkomponente von dem Element eines übergeordneten Automationsgeräts in die Freigabestellung geschaltet werden kann, das gerade in Wirkverbindung mit dem Ankoppelelement steht.

Beispielsweise kann das Ankoppelelement als eine Bohrung, insbesondere lotrechte Bohrung, ausgebildet sein, in die ein Manipulationsfinger des übergeordneten Automationsgeräts für einen Verstellvorgang eingreifen kann. Hierbei kann vorgesehen sein, dass das in die Bohrung eingreifende freie Ende des Manipulationsfingers durch die Bohrung hindurch zu der Arretierkomponente gelangen kann, um das Haltelement entgegen der Rückstellkraft der Feder in die Freigabestellung zu bewegen. Solange der Manipulationsfinger derart eingeführt ist und den Lagerbock verschiebt, hält er gleichzeitig das Haltelement in der Freigabestellung. Wird der Manipulationsfinger wieder aus der Bohrung herausgezogen, drängt die Feder das Haltelement automatisch in die Arretierstellung.

Ganz allgemein kann vorteilhaft vorgesehen sein, dass eine Arretierkomponente eines Lagerbocks automatisch aus einer Arretierstellung in eine Freigabestellung geschaltet wird, wenn ein übergeordnetes Automationsgerät für einen Verschiebevorgang in Wirkverbindung mit einem Ankoppelelement des Lagerbocks tritt.

Insbesondere zur Verwendung in einer Stapelzelle kann der Werkstückträger vorteilhaft stapelbar ausgebildet sein.

Bei einer besonders vorteilhaften Ausführung weist der Werkstückträger einen, insbesondere auf der Außenseite angebrachten, Informationsspeicher auf. Insbesondere kann vorteilhaft vorgesehen sein, dass der Informationsspeicher maschinell und/oder drahtlos auslesbar ist. In dem Informationsspeicher können Informationen bezüglich der aktuellen Einstellung der Lagerböcke und/oder hinsichtlich einer einzustellenden Einstellung der Lagerböcke und/oder hinsichtlich der Ausrichtung der Tragelemente und/oder bezüglich der Art der Tragelemente und/oder bezüglich eines aufgenommenen Werkstücks abgelegt sein oder ablegbar sein. Auf diese Weise ist es insbesondere ermöglicht, dass ein übergeordnetes Automationsgerät Informationen darüber enthält, wie der Werkstückträger gerade eingestellt ist und/oder welche Tragelemente und/oder Werkstücke er beinhaltet. Alternativ oder zusätzlich kann auch vorgesehen sein, dass dem übergeordneten Automationsgerät über den Informationsspeicher mitgeteilt wird, welche Einstellungen der Lagerböcke vorzunehmen ist und/oder welche Tragelemente einzusetzen sind. Der Informationsspeicher kann beispielsweise einen RFID-Transponder aufweisen.

Von besonderem Vorteil ist eine Stapelzelle, die mehrere erfindungsgemäße Werkstückträger beinhaltet.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig.1: ein Ausführungsbeispiel eines erfindungsgemäßen Werkstückträgers,
- Fig.2: den erfindungsgemäßen, mit Werkstücken bestückten Werkstückträger,
- Fig. 3: eine Detailansicht des erfindungsgemäßen Werkstückträgers,
- Fig. 4: eine Querschnittsdarstellung eines Details des erfindungsgemäßen Werkstückträgers,
- Fig. 5: ein Ausführungsbeispiel eines Tragelements des erfindungsgemäßen Werkstückträgers,
- Fig. 6: eine weitere Detailansicht des erfindungsgemäßen Werkstückträger,
- Fig.7: ein Ausführungsbeispiel eines anderen, erfindungsgemäßen Werkstückträgers,
- Fig. 8: den erfindungsgemäßen, mit Werkstücken bestückten anderen Werkstückträger,
- Fig.9: ein weiteres Ausführungsbeispiel eines Tragelements in einer perspektivischen Ansicht mit einem Haltelement,
- Fig. 10: ein Ausführungsbeispiel eines Haltelements,
- Fig. 11: eine Schnittdarstellung eines an dem weiteren Ausführungsbeispiel eines Tragelements angeordneten Haltelements,
- Fig. 12: das Einfügen eines Haltelements in das weitere Ausführungsbeispiel eines Tragelements in einer Seitenansicht,
- Fig. 13: das Einfügen eines Haltelements in das weitere Ausführungsbeispiel eines Tragelements in einer perspektivischen Ansicht,
- Fig. 14: ein weiteres Ausführungsbeispiel eines erfindungsgemäßen Werkstückträgers,

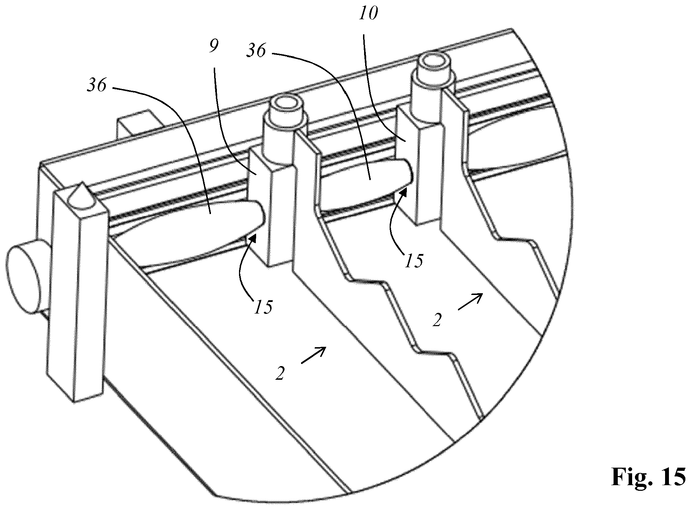

- Fig. 15: eine Detailansicht des weiteren Ausführungsbeispiels eines erfindungsgemäßen Werkstückträgers
- Fig. 16: eine Detailansicht eines vierten Ausführungsbeispiels eines erfindungsgemäßen Werkstückträgers, der erste und zweite Lagerböcke mit jeweils einer eigenen Arretierkomponente aufweist,
- Fig. 17: eine Schnittdarstellung durch einen ersten Lagerbock des vierten Ausführungsbeispiels, bei der sich die Arretierkomponente in einer Arretierstellung befindet,
- Fig. 18: eine weitere Schnittdarstellung durch einen ersten Lagerbock des vierten Ausführungsbeispiels, bei der sich die Arretierkomponente in einer Arretierstellung befindet,
- Fig. 19: eine Schnittdarstellung durch einen ersten Lagerbock des vierten Ausführungsbeispiels, bei der sich die Arretierkomponente in einer Freigabestellung befindet, und
- Fig. 20: eine weitere Schnittdarstellung durch einen ersten Lagerbock des vierten Ausführungsbeispiels, bei der sich die Arretierkomponente in einer Freigabestellung befindet.

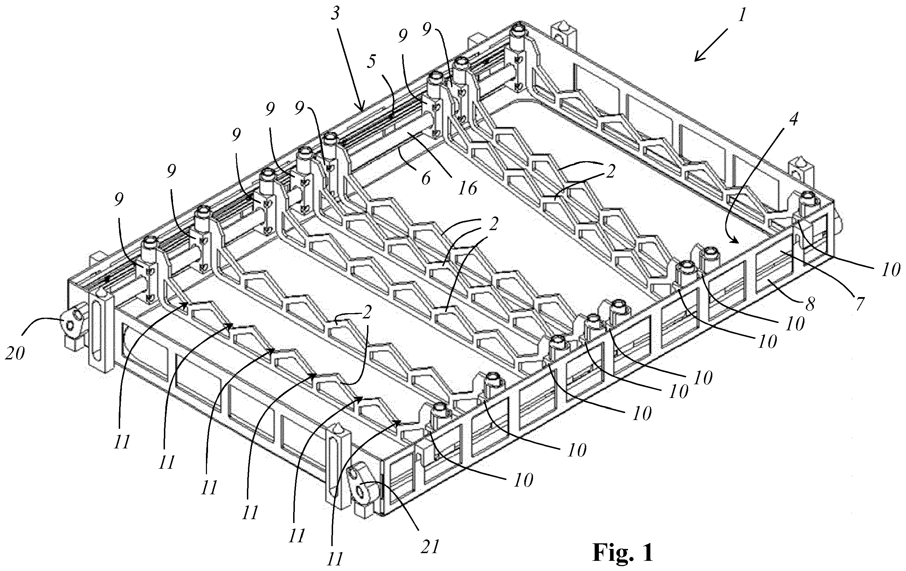

Figur 1 zeigt ein Ausführungsbeispiel eines erfindungsgemäßen Werkstückträgers mit einem Basisteil 1 und mit mehreren Tragelementen 2. Das Basisteil 1 weist ein erstes Geradführungselement 3 und ein von dem ersten Geradführungselement beabstandetes zweites Geradführungselement 4 auf. Das erste Geradführungselement 3 beinhaltet eine obere erste Führungsschiene 5 und eine untere erste Führungsschiene 6. Das zweite Geradführungselement 4 beinhaltet eine zweite obere Führungsschiene 7 und eine zweite untere Führungsschiene 8.

An dem ersten Geradführungselement 3 sind erste Lagerböcke 9 linear verschiebbar angeordnet. An dem zweiten Geradführungselement 4 sind zweite Lagerböcke 10 linear verschiebbar angeordnet. Die ersten Lagerböcke 9 können in Richtung der Längserstreckungsrichtung des ersten Geradführungselements 3 verschoben werden, während die zweiten Lagerböcke 10 in Richtung der Längserstreckungsrichtung des zweiten Geradführungselements 4 verschoben werden können.

Jedes der Tragelemente 2 ist sowohl mit einem der ersten Lageböcke 9, als auch mit einem der zweiten Lagerböcke 10 beweglich verbunden. Konkret sind die Tragelemente 2 mit den ersten Lagerböcken 9 jeweils ausschließlich drehbeweglich verbunden, während die Tragelemente 2 mit den zweiten Lagerböcken 10 nach dem Prinzip einer Langlochführung sowohl drehbeweglich, als auch linearverschiebbar verbunden sind. Auf diese Weise ist es ermöglicht, die ersten Lagerböcke 9 unabhängig von den zweiten Lagerböcken 10 linear zu verschieben.

Die Tragelemente 2 sind an ihrer nach oben ausgerichteten Stirnseite gezackt ausgebildet und weisen Mulden 11 für die aufzunehmenden Werkstücke 12 auf.

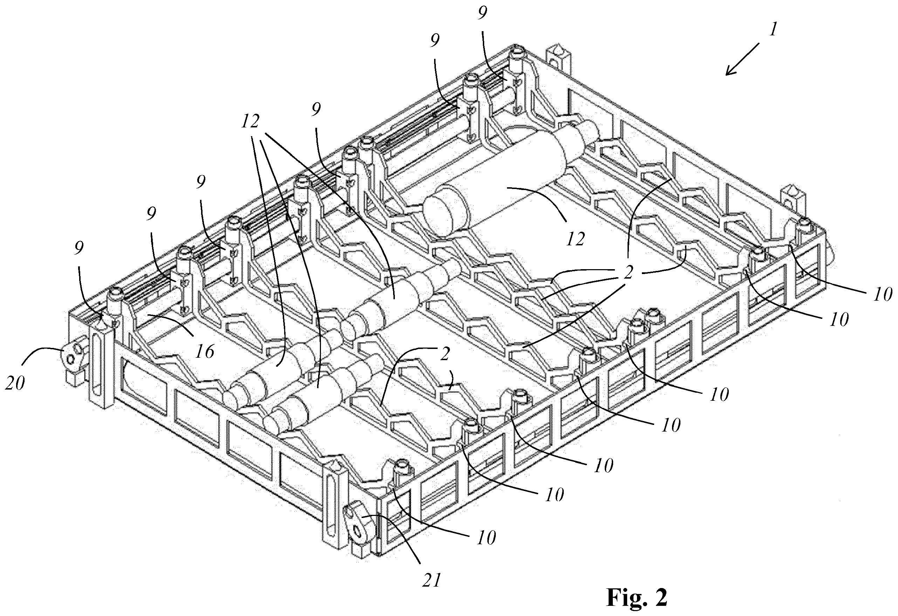

Figur 2 zeigt das Ausführungsbeispiel des erfindungsgemäßen Werkstückträgers, das mit Werkstücken 12 bestückt ist. Die Tragelemente 2 sind durch geeignete Positionierung der ersten und zweiten Lagerböcke (9, 10) speziell passend für die aufzunehmenden Werkstücke eingestellt.

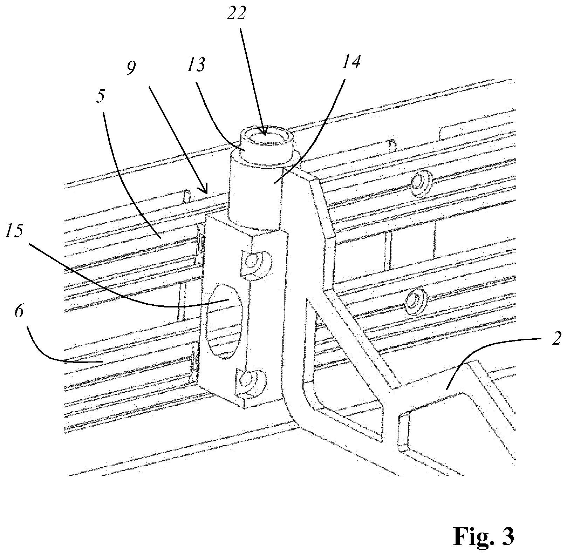

Figur 3 zeigt eine Detailansicht des erfindungsgemäßen Werkstückträgers. Es ist zu erkennen, dass der erste Lagerbock 9 sowohl an der oberen ersten Führungsschiede 5, als auch an der unteren ersten Führungsschiene 6 linear verschiebbar gelagert ist. Der erste Lagerbock 9 weist einen Zapfen 13 auf, auf den eine Öse 14 des Tragelements 2 aufgesteckt ist, wodurch eine zuverlässige und einfach wieder lösbare Scharnierverbindung hergestellt ist. Darüber hinaus weist der erste Lagerbock 9 einen Durchgang 15 für einen Profilstab 16 auf. Der Durchgang 15 und die Profilstab 16 sind Teil einer Arretierungsvorrichtung.

Die Arretiervorrichtung weist einen (in Figur 3 nicht dargestellten) drehbar gelagerten Profilstab 16 auf, der einen von der Kreisform abweichenden Außenquerschnitt aufweist. Der Profilstab 16 verläuft durch jeweils einen Durchgang 15 jedes der ersten Lagerböcke 9, wobei jeder Durchgang 15 einen von der Kreisform abweichenden Innenquerschnitt aufweist. Der Profilstab 16 weist bei diesem Ausführungsbeispiel einen elliptischen Außenquerschnitt auf, während die Durchgänge 15 einen elliptischen Innenquerschnitt aufweisen, wobei die Länge der kleinen Halbachse des Innenquerschnitts kleiner ist, als die Länge der großen Halbachse des Profilstabquerschnitts. Die Mittelachse des Profilstabs 16 verläuft konzentrisch durch die Durchbrüche 15 der ersten Lagerböcke 9.

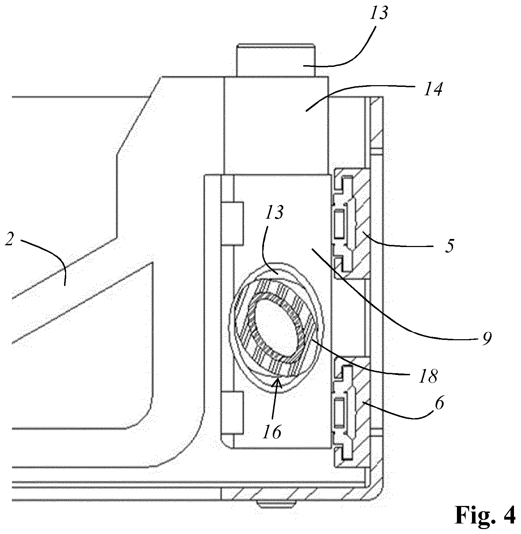

Wenn die Drehstellung des Profilstabs 16 nun so ausgerichtet ist, dass im Querschnitt betrachtet seine große Halbachse parallel zur großen Hablachse des Innenquerschnitts der ersten Lagerböcke 15 ausgerichtet ist, können die ersten Lagerböcke 15, durch die der Profilstab 16 verläuft, frei entlang dem Profilstab 16 linear verschoben werden. Wird der Profilstab 16 jedoch um seine Mittelachse gedreht, legt sich seine Außenseite an die Innenseite der Durchgänge an, wodurch eine Arretierung durch Reibschluss und/oder durch Formschluss erzielt wird, was in Figur 4 dargestellt ist.

Figur 4 zeigt in einer Querschnittsdarstellung einen ersten Lagerbock 9 auf dessen Zapfen 13 die kreisrunde Öse 14 eines Tragelements 2 aufgesteckt ist. Es ist zu erkennen, dass der erste Lagerbock 9 Gegenführungsprofile aufweist, die mit den Führungsprofilen der oberen ersten Führungsschiene 5 und der unteren ersten Führungsschiene 6 zusammenwirken. Figur 4 zeigt außerdem einen Querschnitt durch den elliptischen Profilstab 16 der einen Gummiüberzug 18 aufweist. In der gezeigten Arretierstellung wirkt die Außenseite des Gummiüberzugs 18 reibend und formschlüssig mit der Innenseite des Durchbruchs 15 zusammen, wodurch die Linearverschiebbarkeit des ersten Lagerbocks 9 blockiert ist. Durch Drehen des Profilstabs 16 in Uhrzeigerrichtung kann seine große Halbachse parallel zur großen Halbachse des Durchgangs 15 gedreht werden, wodurch der erste Lagerbock 9 sowie alle weiteren ersten Lagerböcke 9 freigegeben werden. Zum Betätigen weist der Profilstab 16 an einem Ende einen von einem übergeordneten Betätigungsautomaten betätigbares erstes Betätigungselement 20 auf, das beispielweise in den Figuren 1, 2, und 8 zu sehen ist. Für die zweiten Lagerböcke 10 ist eine gleichartige und analog angeordnete Arretiervorrichtung vorhanden, die ein zweites Betätigungselement 21 aufweist, das ebenfalls in den Figuren 1, 2, und 8 zu sehen ist.

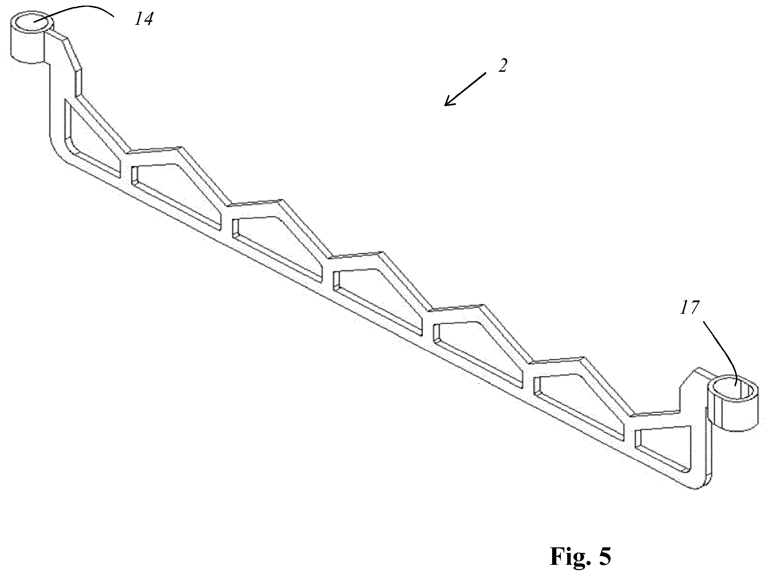

Figur 5 zeigt ein Ausführungsbeispiel eines Tragelements für einen erfindungsgemäßen Werkstückträger. Das Tragelement 2 weist an einem Ende eine kreisförmige Öse 14 zum Aufstecken auf einen ersten Lagerbock 9 auf. Am anderen Ende weist das Tragelement 2 eine längliche Öse 17 zum Aufstecken auf den Zapfen eines zweiten Lagerbocks auf.

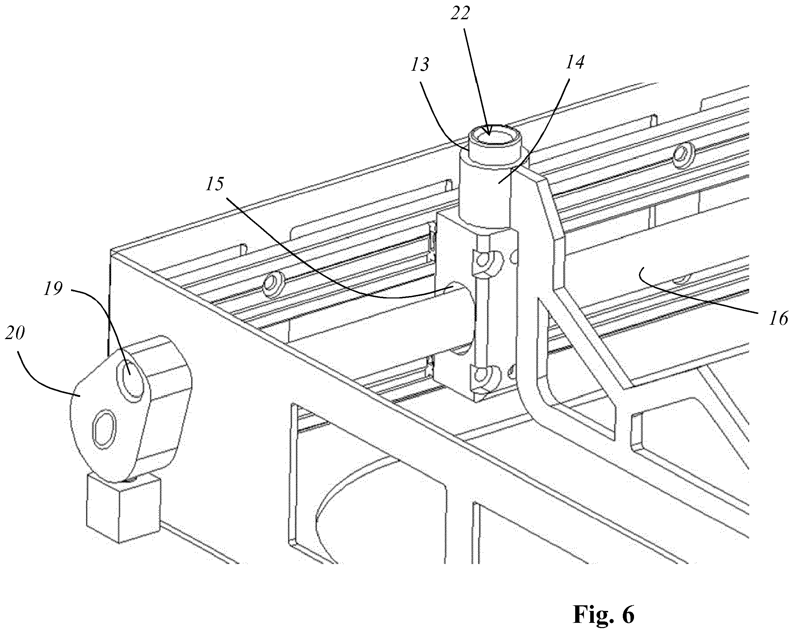

Figur 6 zeigt eine weitere Detailansicht eines erfindungsgemäßen Werkstückträgers. Es ist zu erkennen, dass der Profilstab 16 mittels des nockenartigen Betätigungselements 20 zum Herbeiführen einer Arretierstellung beziehungsweise zum Herbeiführen einer Freigabestellung gedreht werden kann. Das Betätigungselement 20 weist eine Bohrung 19 auf, in die ein Betätigungsfinger eines übergeordneten Automationsgeräts eingeführt werden kann. Der Zapfen 13, auf den die Öse 14 des Tragelements 2 aufgesteckt ist, weist ebenfalls eine Bohrung 22 auf, in die ein Manipulationsfinger eines übergeordneten Automationsgeräts für einen Verschiebevorgang eingeführt werden kann.

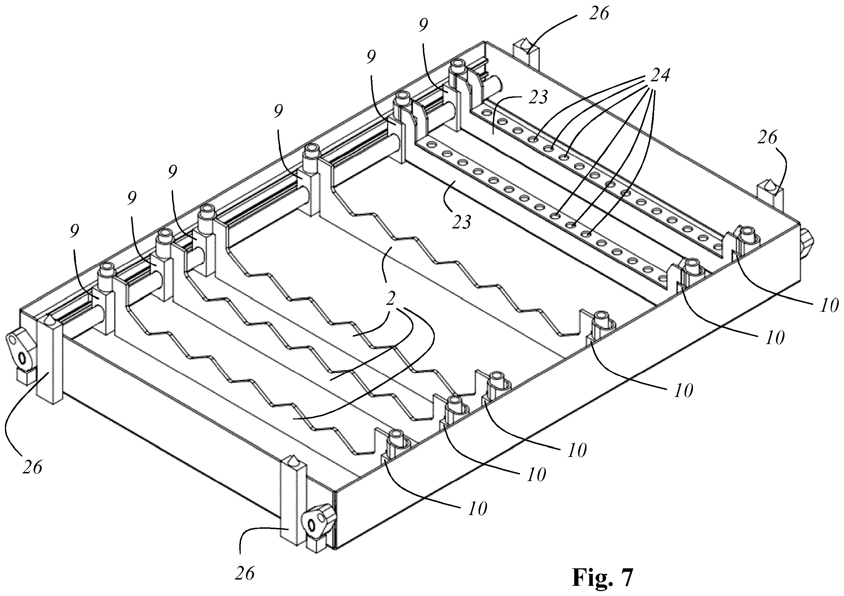

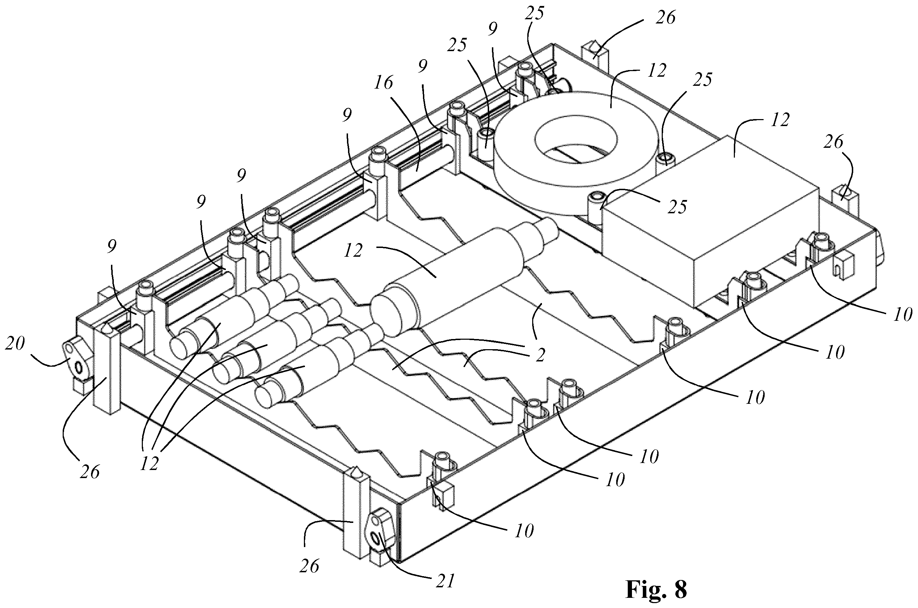

Figur 7 zeigt ein anders Ausführungsbeispiel eines erfindungsgemäßen Werkstückträgers. Bei diesem Ausführungsbeispiel sind neben den oben beschriebenen gezackten Tragelementen 2 weitere Tragelemente 23, die jeweils eine Reihe von Lochungen 24 aufweisen eingesetzt. In die Lochungen 24 können Haltestifte 25 gesteckt werden, die an einem aufzunehmenden Werkstück 12 anliegen und dieses in Position halten, was in Figur 8 gezeigt ist. Außerdem sind Stapelelemente 26 vorhanden, die es erlauben, mehrere der Werkstückträger aufeinander zu stapeln.

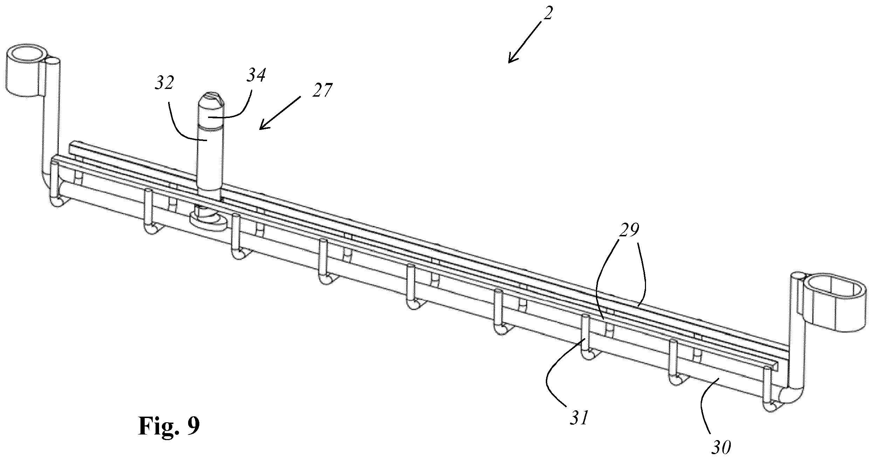

Figur 9 zeigt ein weiteres Ausführungsbeispiel eines Tragelements 2 in einer perspektivischen Ansicht mit einem Haltelement 27. Das Tragelement 2 weist eine Haltekontur 28 mit zwei oberen Drahtriegeln 29 und einem unteren Drahtriegel 30 auf, die fest über Bügel 31 miteinander verbunden sind.

Das Haltelement 27 weist einen vertikal nach oben stehenden Stift 32 auf, auf den ein Werkstück aufsteckbar ist. Insbesondere kann das Tragelement 2 vorteilhaft so ausgebildet sein, dass an der Haltekontur 28 mehrere Halteelemente 27 festgelegt werden können.

Die Haltekontur 28 erstreckt sich entlang der Längserstreckungsrichtung des Tragelementes 2, wobei das Halteelement 27 stufenlos an einer beliebigen Stelle der Haltekontur 28 befestigbar ist.

Das Halteelement 27 kann entlang der Haltekontur 28 verschoben werden, bis die jeweils erforderliche Sollposition erreicht ist. Anschließend kann eine Fixiervorrichtung des Halteelements 27 aktiviert werden, um das Halteelement 27 relativ zu der Haltekontur 28 zu fixieren.

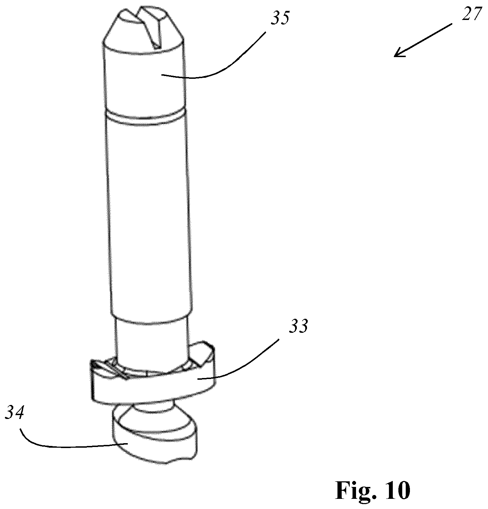

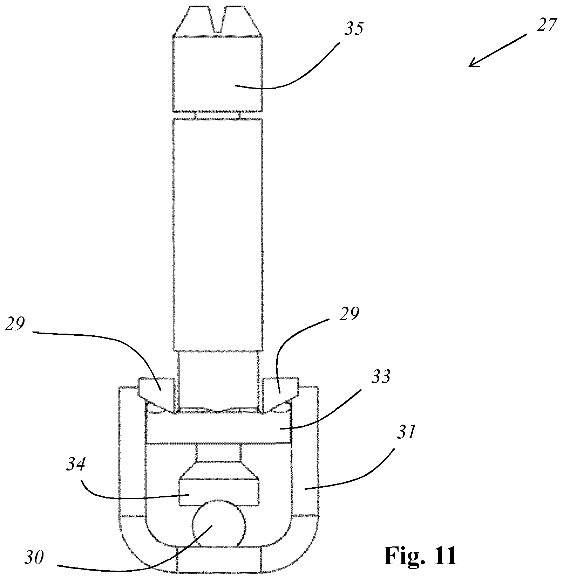

Die Fixiervorrichtung ist in der Weise realisiert, dass das Halteelement 27 eine Klemmvorrichtung aufweist, mittels der das Haltelement 27 wieder lösbar an der Haltekontur 28 fixierbar ist. Die Klemmvorrichtung weist, was insbesondere in den Figuren 10 und 11 zu erkennen ist, einen ovalen Klemmkopf 33 und einen ovalen Klemmschuh 34 auf, deren Abstand veränderbar ist, um das Halteelement 27 innerhalb der Haltekontur 28 zu fixieren, nämlich um eine Klemmung der Fixiervorrichtung zwischen den oberen Drahtriegeln 29 und dem unteren Drahtriegel 30 zu erreichen.

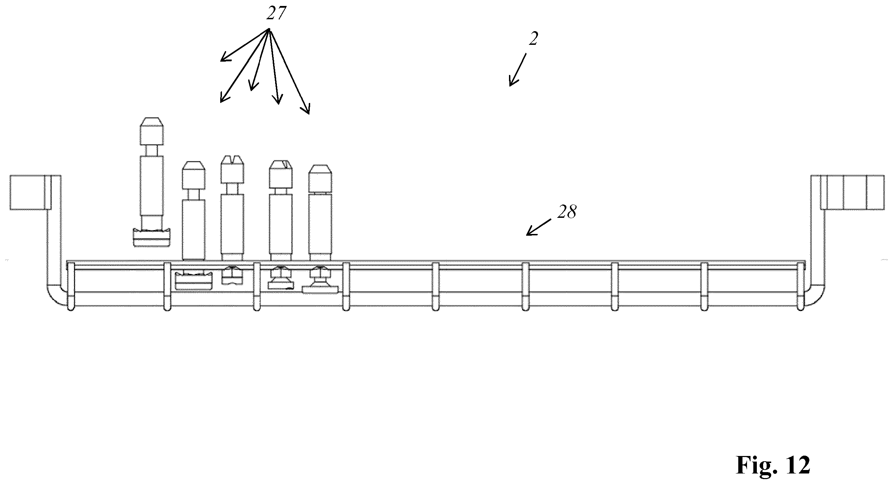

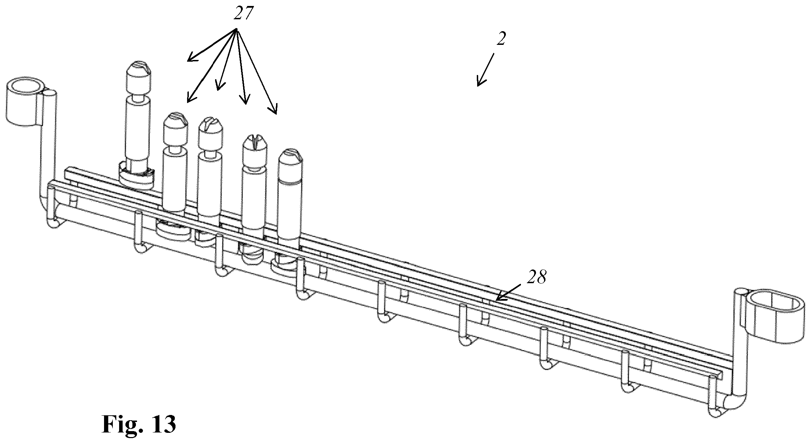

Es ist ein Betätigungsteil 34 vorhanden, mittels dem der Abstand des Klemmkopfs 33 relativ zu dem Klemmschuh 34 veränderbar ist. Der Abstand ist durch ein Rotieren des Betätigungsteils 34 veränderbar, was insbesondere in den Figuren 12 und 13 zu erkennen ist. Hierzu ist der Klemmkopf 33 über einen (nicht dargestellten) Gewindetrieb mit dem Klemmschuh 34 verkoppelt. Der Klemmschuh 34 weist an seiner Unterseite eine Kerbe auf, die sich im Verriegelungszustand formschlüssig an den unteren Drahtriegel 30 anlegt.

Die Figuren 12 und 13 zeigen mehrere Haltelemente 27 zu unterschiedlichen Zeitpunkten während des Einfügens.

Bei einem Einfügen werden zunächst der ovale Klemmkopf 33 und der ovale Klemmschuh 34 deckungsgleich ausgerichtet, so dass sie zwischen den oberen Drahtriegel 29 hindurch in die Haltekontur 28 eingeführt werden können. Die hohe Achse des ovalen Klemmkopfs 33 und des ovalen Klemmschuhs 34 ist dabei beide in Längserstreckungsrichtung des Tragelements 2 ausgerichtet. Anschließend wird das Haltelement 27 insgesamt um 90 Grad um seine Längserstreckungsrichtung gedreht, so dass die hohe Achse des ovalen Klemmkopfs 33 und des ovalen Klemmschuhs 34 dann senkrecht zur Längserstreckungsrichtung des Tragelements 2 ausgerichtet sind. Anschließend wird das Haltelement 27 nach oben gezogen, so dass die seitlichen Flanken des Klemmkopfs 33 formschlüssig mit Hinterschnitten der oberen Drahtriegel 29 in Wirkverbindung treten. Zum Fixieren wird dann das Betätigungsteil 35 rotiert, wodurch der Klemmschuh 34 in 90 Grad-Schritten rotiert bis er gegen den unteren Drahtriegel gedrückt wird.

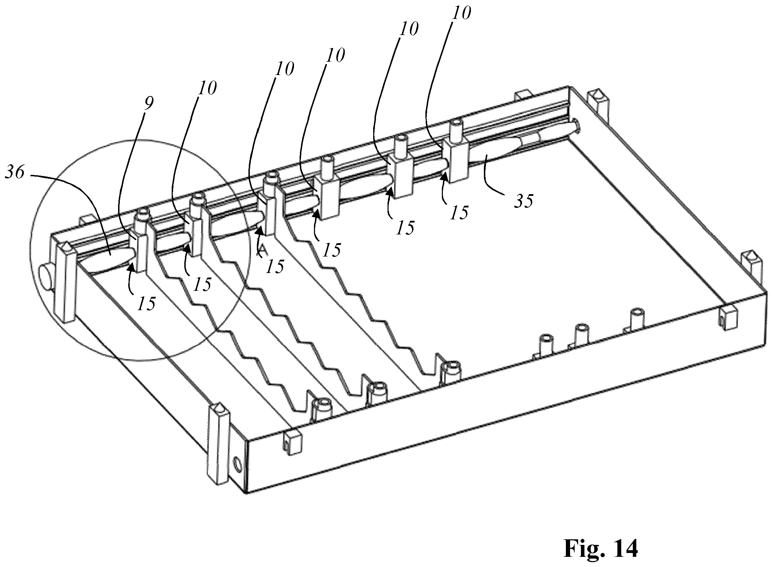

Figur 14 zeigt ein weiteres Ausführungsbeispiel eines erfindungsgemäßen Werkstückträgers. Bei dieser Ausführung weist die Arretiervorrichtung einen dehnbaren Schlauch 36 auf, der zum Arretieren der Lagerböcke 9, 10 von innen mit einem erhöhten Gasdruck, insbesondere Luftdruck, beaufschlagbar ist, so dass er sich ausdehnt und jeden Lagerbock 9, 10 form- und/oder reibschlüssig arretiert.

Der Schlauch 36 beinhaltet ein (nicht dargestelltes) perforiertes Rohr, über das Gas, insbesondere Luft, in den Schlauch 36 eingelassen bzw. aus dem Schlauch 36 abgelassen werden kann. Das Rohr verläuft durch die gesamte Länge des Schlauchs 36. Der Schlauch 36 erstreckt sich samt dem Rohr durch jeweils einen Durchgang 15 eines jeden der Lagerböcke 9, 10, wobei der Außendurchmesser des Schlauchs 36, wenn er nicht mit einem erhöhten Gasdruck, insbesondere Luftdruck, beaufschlagt ist, kleiner ist als der Innendurchmesser der Durchgänge 15 und wobei sich der Schlauch 36, wenn er mit einem erhöhten Gasdruck, insbesondere Luftdruck, beaufschlagt ist, an die Innenwände jedes Durchgangs 15 reibschlüssig anlegt und vor und hinter jedem Durchgang 15 einen Wulst erzeugt, der den jeweiligen Lagerbock 9, 10 zusätzlich formschlüssig arretiert. Zum Freigeben der Lagerböcke 9, 10 wird Gas aus dem Schlauch 36 abgelassen.

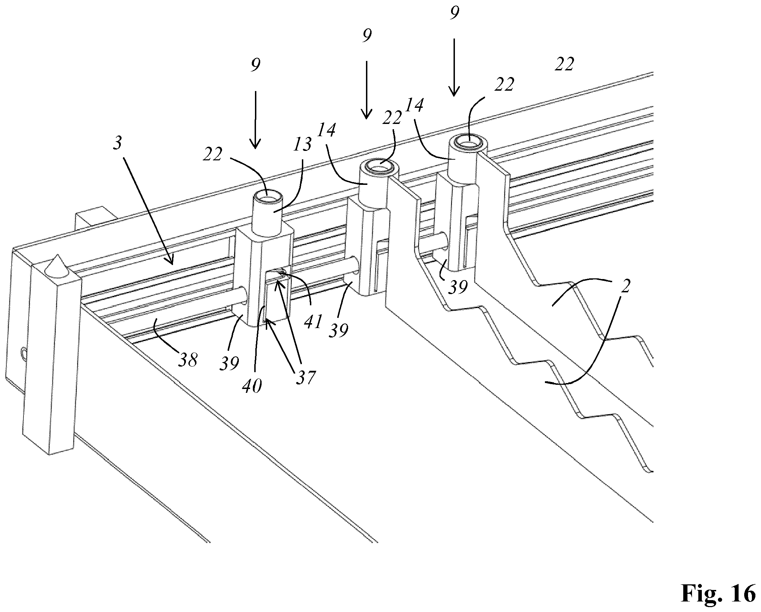

Fig.16 zeigt eine Detailansicht des vierten Ausführungsbeispiels eines erfindungsgemäßen Werkstückträgers, der erste Lagerböcke 9 und zweite Lagerböcke 10 mit jeweils einer eigenen Arretierkomponente 37 aufweist. Bei dieser Ausführung ist jeder der ersten Lagerböcke 9 und zweiten Lagerböcke 10 mittels der eigenen Arretierkomponente 37 in seiner Stellung arretiert, wobei jeder Arretierkomponente 37 unabhängig von einer Arretierstellung anderer Arretierkomponenten 37 anderer erster oder zweiter Lagerböcke 9, 10 wahlweise in eine Arretierstellung oder eine Freigabestellung überführbar ist.

Daher ist es bei dieser Ausführung möglich, einen der ersten Lagerböcke 9 oder der zweiten Lagerböcke 10 nach Überführung von dessen Arretierkomponente 37 in eine Freigabestellung zu verschieben, ohne die Arretierkomponenten 37 der übrigen der ersten Lagerböcke 9 und zweiten Lagerböcke 10 in eine Freigabestellung schalten zu müssen. Auf diese Weise ist vorteilhaft erreicht, dass ein versehentliches und ungewolltes Verschieben der übrigen ersten und zweiten Lagerböcke 9, 10 zuverlässig vermieden ist.

In Fig. 16 sind ausschließlich erste Lagerböcke 9 zu sehen. Daher ist nachfolgend ausschließlich auf die ersten Lagerböcke 9 Bezug genommen. Die nicht eingezeichneten zweiten Lagerböcke 10 sind bei diesem Ausführungsbeispiel jedoch identisch aufgebaut.

Jeder der ersten Lagerböcke 9 weist eine eigene erste Arretierkomponente 37 aufweist, die in der Arretierstellung mit einem parallel zum ersten Geradführungselement verlaufenden Profilstab 38 reibschlüssig und/oder formschlüssig zusammen wirkt. Der Profilstab 38 ist als Rundrohr 38 ausgebildet und verläuft durch einen Durchgang in einem Grundkörper 39 jedes ersten Lagerbocks 9.

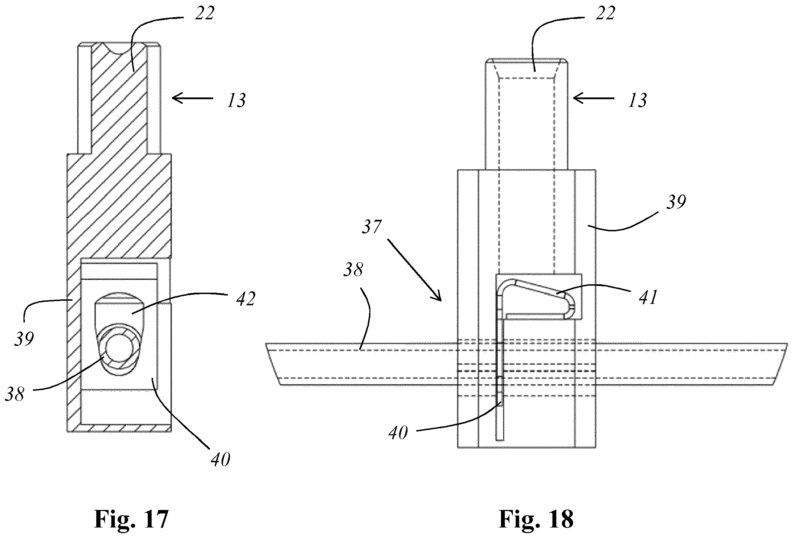

Die erste Arretierkomponente 37 weist ein Halteelement 40 und eine Feder 41 auf, deren Anordnung und Funktionsweise nachfolgend insbesondere unter Bezugnahme auf die Figuren 17 bis 20 erläutert ist.

Fig. 17 zeigt eine Schnittdarstellung durch einen ersten Lagerbock 9 des vierten Ausführungsbeispiels, bei der sich die Arretierkomponente 37 in einer Arretierstellung befindet. Die Schnittebene steht senkrecht zur Längserstreckungsrichtung des Profilstabes 38.

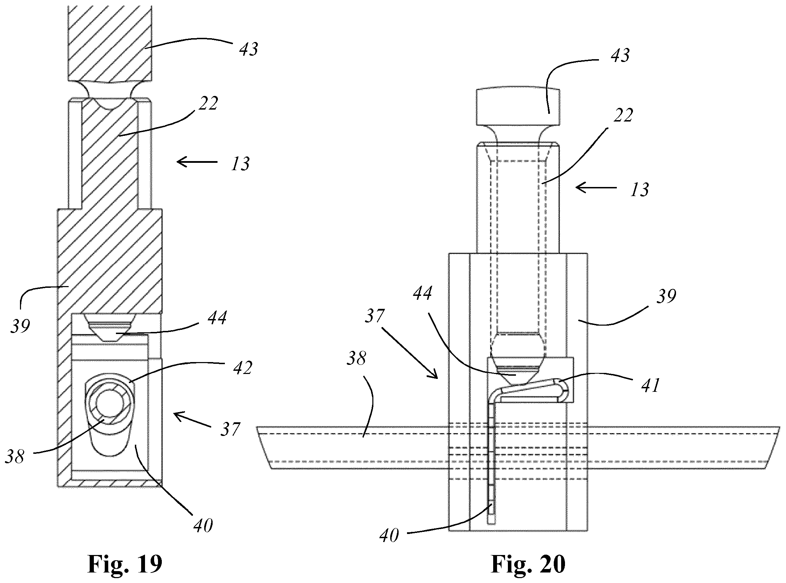

Die erste Arretierkomponente 37 weist ein flaches, linear innerhalb des Grundkörpers 39 verschiebbares Halteelement 40 mit einem Durchbruch 42 auf, durch den der Profilstab 38 verläuft. Der Durchbruch 42 des Haltelements 40 ist länglich ausgebildet, wobei sich der Durchlassquerschnitt entlang der Längsrichtung des Durchbruchs 42 verringert. In dem oberen Endbereich des Durchbruchs 42 ist der Durchlassquerschnitt größer als der Querschnitt des Profilstabes 38. Solange der Profilstab durch diesen Endbereich verläuft, befindet sich die Arretierkomponente 37 in ihrer Freigabestellung, so dass der Lagerbock frei verschoben werden kann. Diese Situation ist in den Figuren 19 und 20 gezeigt. In der in den Figuren 17 und 18 gezeigten Arretierstellung ist das Halteelement 40 senkrecht zur Längserstreckungsrichtung des Profilstabes 38 nach oben verschoben, so dass die Stirnflächen des sich verjüngenden Durchbruchs reib- und/oder formschlüssig mit dem Profilstab 38 in Wirkverbindung stehen. In der Arretierstellung kann der Lagerbock 9 nicht verschoben werden.

Die Arretierkomponente 37 weist eine Feder 41 auf, die das Haltelement 40 nach oben in die Arretierstellung drängt. Entgegen der Rückstellkraft der Feder 41 kann das Haltelement 40 nach unten in die Freigabestellung bewegt werden, wenn der Lagerbock 9 verschoben werden soll. Die Feder 41 und das Halteelement 40 sind gemeinsam einstückig aus einem gestanzten Federstahlblech hergestellt.

Der Lagerbock 9 weist ein Ankoppelelement auf, das dazu ausgebildet und bestimmt ist, für einen Verstellvorgang, bei dem der erste Lagerbock 9 entlang dem ersten Geradführungselement 3 verschoben wird, mit einem übergeordneten Automationsgerät in Wirkverbindung zu treten. Konkret weist der erste Lagerbock 9 einen Zapfen 13 auf, auf den die Öse 14 eines Tragelements 2 aufgesteckt werden kann. Der Zapfen 13 weist eine Bohrung 22 auf, in die ein Manipulationsfinger 43 eines übergeordneten Automationsgeräts für einen Verschiebevorgang eingeführt werden kann.

Bei dem in den Figuren 17 bis 20 gezeigten Ausführungsbeispiel ist vorgesehen, dass das in die Bohrung 22 eingreifende freie Ende 44 des Manipulationsfingers 43 durch die Bohrung 22 hindurch zu der Arretierkomponente 37 gelangen kann, um das Haltelement 40 entgegen der Rückstellkraft der Feder 41 in die Freigabestellung zu bewegen. Solange der Manipulationsfinger 43 derart eingeführt ist, hält der Manipulationsfinger 43 das Haltelement 40 in der Freigabestellung. Dies insbesondere auch während er den ersten Lagerbock 9 verschiebt. Wird der Manipulationsfinger 43 wieder aus der Bohrung 22 herausgezogen, drängt die Feder 41 das Haltelement 40 automatisch nach oben zurück in die Arretierstellung.

### Bezugszeichenliste:

- 1: Basisteil
- 2: Tragelement
- 3: erstes Geradführungselement
- 4: zweites Geradführungselement
- 5: erste obere Führungsschiene
- 6: erste untere Führungsschiene
- 7: zweite obere Führungsschiene
- 8: zweite untere Führungsschiene
- 9: erste Lagerböcke
- 10: zweite Lagerböcke
- 11: Mulden
- 12: Werkstücke
- 13: Zapfen
- 14: Öse
- 15: Durchgang
- 16: Profilstab
- 17: längliche Öse
- 18: Gummiüberzug
- 19: Bohrung
- 20: erstes Betätigungselement
- 21: zweites Betätigungselement
- 22: weitere Bohrung
- 23: weitere Tragelemente
- 24: Lochungen
- 25: Haltestifte
- 26: Stapelelemente
- 27: Haltelement
- 28: Haltekontur
- 29: Oberer Drahtriegel
- 30: Unterer Drahtriegel
- 31: Bügel
- 32: Stift
- 33: Klemmkopf
- 34: Klemmschuh
- 35: Betätigungsteil
- 36: Schlauch
- 37: Erste Arretierkomponente
- 38: Profilstab
- 39: Grundkörper
- 40: Halteelement
- 41: Feder
- 42: Durchbruch des Halteelementes 40
- 43: Manipulationsfinger
- 44: freies Ende des Manipulationsfingers 43

## Patentansprüche

1. Werkstückträger mit einem Basisteil (1) und wenigstens einem Tragelement (2), wobei das Basisteil (1) ein erstes Geradführungselement (3) und ein von dem ersten Geradführungselement (3) beabstandetes zweites Geradführungselement (4) aufweist, und dass wenigstens ein erster Lagerbock (9) vorhanden ist, der linear verschiebbar an dem ersten Geradführungselement (3) angeordnet ist, und dass wenigstens ein zweiter Lagerbock (10) vorhanden ist, der linear verschiebbar an dem zweiten Geradführungselement (4) angeordnet ist, **dadurch gekennzeichnet, dass**
a. das Tragelement (2) sowohl mit dem ersten Lagerbock (9) beweglich, nämlich relativ zu dem ersten Geradführungselement (3) schwenkbar, als auch mit dem zweiten Lagerbock (10) beweglich, nämlich relativ zu dem zweiten Geradführungselement (4) schwenkbar, verbunden ist und/oder dass
b. das Tragelement (2) sowohl mit dem ersten Lagerbock (9), als auch mit dem zweiten Lagerbock (10) derart verbunden ist, dass die Lagerböcke (9, 10) unabhängig voneinander linear verschiebbar sind.

2. Werkstückträger nach Anspruch 1, **dadurch gekennzeichnet, dass**
a. das erste Geradführungselement (3) und das zweite Geradführungselement (4) parallel zueinander angeordnet sind, und/oder dass
b. das erste Geradführungselement (3) und das zweite Geradführungselement (4) an zwei einander gegenüberliegenden Rändern des Basisteils (1) angeordnet sind, und/oder dass
c. das Basisteil (1) an zwei einander gegenüberliegenden Rändern zwei Seitenabschnitte aufweist, wobei an einem ersten Seitenabschnitt das erste Geradführungselement (3) angeordnet ist und wobei an einem zweiten Seitenabschnitt das zweite Geradführungselement (4) angeordnet ist, und/oder dass das erste Geradführungselement (3) wenigstens eine Führungsschiene (5, 6) aufweist, oder dass
d. das erste Geradführungselement (3) zwei zueinander parallele und/oder übereinander angeordnete Führungsschienen (5, 6) aufweist, oder dass
e. das zweite Geradführungselement (4) wenigstens eine Führungsschiene (7, 8) aufweist, oder dass
f. das zweite Geradführungselement (4) zwei zueinander parallele und/oder übereinander angeordnete Führungsschienen (7, 8) aufweist.

3. Werkstückträger nach Anspruch 1 oder 2, **dadurch gekennzeichnet, dass**
a. das Tragelement (2) mit dem ersten Lagerbock (9) drehbeweglich und mit dem zweiten Lagerbock (10) sowohl drehbeweglich, als auch linear verschiebbar verbunden ist, oder dass
b. das Tragelement (2) länglich ausgebildet ist und an einem Ende mit dem ersten Lagerbock (9) drehbeweglich und an einem anderen Ende mit dem zweiten Lagerbock (10) sowohl drehbeweglich, als auch in Richtung seiner Längserstreckungsachse verschiebbar verbunden ist.

4. Werkstückträger nach einem der Ansprüche 1 bis 3, **dadurch gekennzeichnet, dass**
a. das Tragelement (2) eine erste Öse (14) aufweist, die drehbar auf einen, insbesondere lotrecht ausgerichteten, ersten Zapfen (13) des ersten Lagerbocks (9) aufgesteckt ist, und/oder dass das Tragelement (2) eine erste im Querschnitt kreisrunde Öse (14) aufweist, die drehbar auf einen, insbesondere lotrecht ausgerichteten, im Querschnitt kreisrunden ersten Zapfen (13) des ersten Lagerbocks (9) aufgesteckt ist, und/oder dass das Tragelement (2) eine zweite Öse (14) aufweist, die auf einen, insbesondere lotrecht ausgerichteten, zweiten Zapfen (13) des zweiten Lagerbocks (10) aufgesteckt ist, und/oder dass das Tragelement (2) eine zweite, längliche Öse (14) aufweist, die auf einen, insbesondere lotrecht ausgerichteten, zweiten Zapfen (13) des zweiten Lagerbocks (10) aufgesteckt ist, oder dass
b. das Tragelement (2) einen, insbesondere lotrecht ausgerichteten, ersten Zapfen aufweist, der in einer ersten Ausnehmung des ersten Lagerbocks wenigstens drehbar gelagert ist, und/oder dass das Tragelement (2) einen, insbesondere lotrecht ausgerichteten, zweiten Zapfen aufweist, der in einer zweiten, insbesondere länglichen, Ausnehmung des zweiten Lagerbocks wenigstens drehbar, insbesondere drehbar und in Richtung der Längserstreckungsachse des Tragelementes (2) verschiebbar, gelagert ist.

5. Werkstückträger nach einem der Ansprüche 1 bis 4, **dadurch gekennzeichnet, dass**
a. das Tragelement (2) wenigstens eine, insbesondere nach oben gerichtete, Mulde (11) für ein zu tragendes Werkstück aufweist, oder dass
b. das Tragelement (2) wenigstens eine, insbesondere lotrecht ausgerichtete, Lochung (24) oder eine Reihe von Lochungen (24) aufweist, oder dass
c. das Tragelement (2) wenigstens eine, insbesondere lotrecht ausgerichtete, Lochung (24) oder eine Reihe von Lochungen (24) aufweist, wobei Haltestifte in den Lochungen positioniert sind, oder dass
d. das Tragelement (2) eine Haltekontur (28) und wenigstens ein an der Haltekontur befestigbares Halteelement (27) aufweist, an dem ein Werkstück direkt oder indirekt festlegbar ist, oder dass
e. das Tragelement (2) eine sich entlang der Längserstreckungsrichtung erstreckende Haltekontur (28) und wenigstens ein an beliebiger Stelle der Haltekontur (28) befestigbares Halteelement (27) aufweist, an dem ein Werkstück direkt oder indirekt festlegbar ist, oder dass
f. das Tragelement (2) eine Haltekontur (28) und wenigstens ein an der Haltekontur (28) befestigbares Halteelement (27) aufweist, an dem ein Werkstück direkt oder indirekt festlegbar ist, wobei das Halteelement (27) vor dem Aktivieren einer Fixiervorrichtung entlang der Haltekontur (28) verschiebbar ist, oder dass
g. das Tragelement (2) eine Haltekontur (28) und wenigstens ein an der Haltekontur (28) befestigbares Halteelement (27) aufweist, an dem ein Werkstück direkt oder indirekt festlegbar ist, wobei das Halteelement (27) eine Klemmvorrichtung aufweist, mittels der das Haltelement (27) wieder lösbar an der Haltekontur (28) fixierbar ist.

6. Werkstückträger nach einem der Ansprüche 1 bis 5, **dadurch gekennzeichnet, dass**
a. das Tragelement (2) in Leichtbauweise ausgeführt ist, und/oder dass
b. das Tragelement (2) wenigstens teilweise aus Blech oder aus Stahlblech oder als Aluminiumblech oder aus faserverstärktem Kunststoff oder aus kohlenfaserverstärktem Kunststoff hergestellt ist, und/oder dass
c. das Tragelement (2) Durchbrüche aufweist, und/oder dass
d. das Tragelement (2) wenigstens teilweise als Stanzblechteil hergestellt ist, und/oder dass
e. das Tragelement (2) eine Drahtstruktur mit sich kreuzenden Drahtriegeln aufweist, und/oder dass
f. das Tragelement (2) wenigstens teilweise durch einen Drahtkorb gebildet ist, und/oder dass
g. das Basisteil (1) einen Korb oder einen rechteckigen Rahmen aufweist, oder dass
h. das Basisteil (1) wenigstens teilweise durch eine Drahtstruktur gebildet ist, oder dass
i. das Basisteil (1) wenigstens teilweise durch eine Drahtstruktur mit sich kreuzenden Drahtriegeln gebildet ist, oder dass
j. das Basisteil (1) einen Drahtkorb aufweist, oder dass
k. das Basisteil (1) wenigstens teilweise aus Blech oder gelochtem Blech hergestellt ist.

7. Werkstückträger nach einem der Ansprüche 1 bis 6, **dadurch gekennzeichnet, dass**
a. der erste Lagerbock (9) ein Ankoppelelement aufweist, das dazu ausgebildet und bestimmt ist, für einen Verstellvorgang, bei dem der erste Lagerbock (9) entlang dem ersten Geradführungselement (3) verschoben wird, mit einem übergeordneten Automationsgerät in Wirkverbindung zu treten, und/oder dass
b. der zweite Lagerbock (10) ein Ankoppelelement aufweist, das dazu ausgebildet und bestimmt ist, für einen Verstellvorgang, bei dem der zweite Lagerbock (10) entlang dem zweiten Geradführungselement (4) verschoben wird, mit einem übergeordneten Automationsgerät in Wirkverbindung zu treten.

8. Werkstückträger nach Anspruch 7, **dadurch gekennzeichnet, dass**
a. das Ankoppelelement dazu ausgebildet ist, formschlüssig mit einem übergeordneten Automationsgerät in Wirkverbindung zu treten, oder dass
b. das Ankoppelelement als, insbesondere lotrechte, Bohrung ausgebildet ist, oder dass
c. das Ankoppelelement als, insbesondere lotrechte, Bohrung in einem Zapfen (13), auf den eine Öse (14) des Tragelements (2) aufgesteckt ist, ausgebildet ist, oder dass
d. das Ankoppelelement dazu ausgebildet ist, per Magnetkraft mit einem übergeordneten Automationsgerät in Wirkverbindung zu treten, oder dass
e. das Ankoppelelement einen Magneten aufweist.

9. Werkstückträger nach einem der Ansprüche 1 bis 8, **dadurch gekennzeichnet, dass**
a. an dem ersten Geradführungselement (3) mehrere erste, insbesondere gleiche, Lagerböcke (9) linear verschiebbar angeordnet sind und dass an dem zweiten Geradführungselement (4) mehrere zweite, insbesondere gleiche, Lagerböcke (10) linear verschiebbar angeordnet sind, oder dass
b. an dem ersten Geradführungselement (3) mehrere erste, insbesondere gleiche, Lagerböcke (9) linear verschiebbar angeordnet sind und dass an dem zweiten Geradführungselement (4) mehrere zweite, insbesondere gleiche, Lagerböcke (10) linear verschiebbar angeordnet sind, wobei mehrere Tragelemente (2) vorhanden sind, wobei jedes Tragelement (2) wenigstens mit einem der ersten Lagerböcke (9) und mit wenigstens einem der zweiten Lagerböcke (10) beweglich verbunden ist und/oder derart verbunden ist, dass der jeweils erste Lagerbock (9), mit dem es verbunden ist, und derwenigstens eine zweite Lagerbock (10), mit dem es verbunden ist, unabhängig voneinander linear verschiebbar sind.

10. Werkstückträger nach einem der Ansprüche 1 bis 9, **dadurch gekennzeichnet, dass** wenigstens eine Arretiervorrichtung vorhanden ist, mittels der die jeweils gerade eingestellte Verschiebestellung des wenigstens einen ersten Lagerbocks (9) relativ zum ersten Geradführungselement (3) und/oder die jeweils gerade eingestellte Verschiebestellung des wenigstens einen zweiten Lagerbocks (10) relativ zum zweiten Geradführungselement (4), insbesondere wieder lösbar, arretierbar ist.

11. Werkstückträger nach Anspruch 10, **dadurch gekennzeichnet, dass**
a. die Arretiervorrichtung eine erste Arretiereinheit und eine zweite Arretiereinheit aufweist, wobei mittels der ersten Arretiereinheit die jeweils gerade eingestellte Verschiebestellung des ersten Lagerbocks (9) relativ zum ersten Geradführungselement (3), insbesondere wieder lösbar, arretierbar ist, und wobei mittels der zweiten Arretiereinheit die jeweils gerade eingestellte Verschiebestellung des zweiten Lagerbocks (10) relativ zum zweiten Geradführungselement (4), insbesondere wieder lösbar, arretierbar ist, und/oder dass
b. die Arretiervorrichtung eine erste Arretiereinheit und eine zweite Arretiereinheit aufweist, wobei mittels der ersten Arretiereinheit die jeweils gerade eingestellten Verschiebestellungen mehrerer erster Lagerböcke (9), insbesondere aller ersten Lagerböcke (9), relativ zum ersten Geradführungselement (3) arretierbar sind, und dass mittels der zweiten Arretiereinheit die jeweils gerade eingestellten Verschiebestellungen mehrerer zweiter Lagerböcke (10), insbesondere aller zweiten Lagerböcke (10), relativ zum zweiten Geradführungselement (4) arretierbar sind, und/oder dass
c. mit einer einzigen Arretierungsbetätigung gleichzeitig mehrere Lagerböcke (9, 10) arretierbar sind und/oder dass mit einer einzigen Freigabebetätigung gleichzeitig mehrere arretierte Lagerböcke (9, 10) freigebbar sind.

12. Werkstückträger nach Anspruch 10 oder 11, **dadurch gekennzeichnet, dass**
a. die Arretiervorrichtung einen drehbar gelagerten Profilstab (16) aufweist, der einen von der Kreisform abweichenden Außenquerschnitt aufweist und der wahlweise in eine Arretierstellung, in der er reibschlüssig und/oder formschlüssig arretierend mit dem zu arretierenden Lagerbock (9, 10) zusammenwirkt, oder eine Freigabestellung, in der er nicht arretierend mit dem zu arretierenden Lagerbock (9, 10) zusammenwirkt, drehbar ist, oder dass
b. die Arretiervorrichtung einen drehbar gelagerten Profilstab (16) aufweist, der einen von der Kreisform abweichenden Außenquerschnitt aufweist und der wahlweise in eine Arretierstellung, in der er reibschlüssig und/oder formschlüssig arretierend mit dem zu arretierenden Lagerbock (9, 10) zusammenwirkt, oder eine Freigabestellung, in der er nicht arretierend mit dem dem zu arretierenden Lagerbock (9, 10) zusammenwirkt, drehbar ist, wobei der Profilstab (16) durch einen Durchgang (15) mit einem von der Kreisform abweichenden Innenquerschnitt des zu arretierenden Lagerbocks (9, 10) oder durch jeweils einen Durchgang (15), der einen von der Kreisform abweichenden Innenquerschnitt aufweist, mehrerer zu arretierender Lagerböcke (9, 10) verläuft und dass der Profilstab (16) in der Arretierstellung reibschlüssig und/oder formschlüssig arretierend mit dem Durchgang (15) zusammenwirkt, und in der Freigabestellung nicht arretierend mit dem Durchgang (15) zusammenwirkt, oder dass
c. die Arretiervorrichtung einen drehbar gelagerten Profilstab (16) aufweist, der einen von der Kreisform abweichenden Außenquerschnitt aufweist und der wahlweise in eine Arretierstellung, in der er reibschlüssig und/oder formschlüssig arretierend mit dem zu arretierenden Lagerbock (9, 10) zusammenwirkt, oder eine Freigabestellung, in der er nicht arretierend mit dem dem zu arretierenden Lagerbock (9, 10) zusammenwirkt, drehbar ist, wobei der Profilstab (16) neben dem zu arretierenden Lagerbock (9, 10) angeordnet ist und in der Arretierstellung reibschlüssig und/oder formschlüssig arretierend an dem Lagerbock (9, 10) anliegt und in der Freigabestellung nicht an dem Lagerbock (9, 10) anliegt, oder dass
d. die Arretiervorrichtung einen dehnbaren Schlauch (26) aufweist, der zum Arretieren des Lagerbocks (9, 10) von innen mit einem erhöhten Gasdruck, insbesondere Luftdruck, beaufschlagbar ist, so dass er sich ausdehnt und den Lagerbock (9, 10) form-und/oder reibschlüssig arretiert, oder das
e. die Arretiervorrichtung einen dehnbaren Schlauch (36) aufweist, der zum Arretieren des Lagerbocks (9, 10) von innen mit einem erhöhten Gasdruck, insbesondere Luftdruck, beaufschlagbar ist und der sich durch einen Durchgang (15) des zu arretierenden Lagerbocks (9, 10) erstreckt, oder dass
f. der erste Lagerbock (9) eine eigene erste Arretierkomponente (37) aufweist, die unabhängig von einer Arretierstellung anderer Arretierkomponenten (37) anderer erster oder zweiter Lagerböcke (9, 10) wahlweise in eine Arretierstellung oder eine Freigabestellung überführbar ist, wobei die erste Arretierkomponente in der Arretierstellung mit dem ersten Geradführungselement (3) und/oder mit einem parallel zum ersten Geradführungselement (3) verlaufenden Profilstab (38) reibschlüssig und/oder formschlüssig zusammen wirkt, oder dass
g. der zweite Lagerbock (10) eine eigene zweite Arretierkomponente aufweist, die unabhängig von einer Arretierstellung anderer Arretierkomponenten (37) anderer erster oder zweiter Lagerböcke (9, 10) wahlweise in eine Arretierstellung oder eine Freigabestellung überführbar ist, wobei die zweite Arretierkomponente in der Arretierstellung mit dem zweiten Geradführungselement (4) und/oder mit einem parallel zum zweiten Geradführungselement (4) verlaufenden Profilstab reibschlüssig und/oder formschlüssig zusammen wirkt, oder dass
h. jeder erste Lagerbock (9) eine eigene erste Arretierkomponente (37) aufweist, die unabhängig von einer Arretierstellung anderer Arretierkomponenten (37) anderer erster oder zweiter Lagerböcke (9, 10) wahlweise in eine Arretierstellung oder eine Freigabestellung überführbar ist, wobei die erste Arretierkomponente (37) in der Arretierstellung mit dem ersten Geradführungselement (3) und/oder mit einem parallel zum ersten Geradführungselement (3) verlaufenden Profilstab (38) reibschlüssig und/oder formschlüssig zusammen wirkt, oder dass
i. jeder zweite Lagerbock (10) eine eigene zweite Arretierkomponente aufweist, die unabhängig von einer Arretierstellung anderer Arretierkomponenten anderer erster oder zweiter Lagerböcke (9, 10) wahlweise in eine Arretierstellung oder eine Freigabestellung überführbar ist, wobei die zweite Arretierkomponente in der Arretierstellung mit dem zweiten Geradführungselement (4) und/oder mit einem parallel zum zweiten Geradführungselement (4) verlaufenden Profilstab reibschlüssig und/oder formschlüssig zusammen wirkt.

13. Werkstückträger nach Anspruch 12, **dadurch gekennzeichnet, dass**
a. der Durchgang (15) und/oder der Profilstab (16) und/oder der Lagerbock (9, 10) eine elastische Oberfläche aufweisen, und/oder dass
b. an dem Profilstab (16), insbesondere stirnseitig, ein Betätigungselement (20) angeordnet ist, und/oder dass
c. an dem Profilstab (16), insbesondere stirnseitig, ein Betätigungselement (20) angeordnet ist, das dazu ausgebildet und bestimmt ist, für einen Umschaltvorgang von der Freigabestellung in die Arretierstellung und/oder von der Arretierstellung in die Freigabestellung mit einem übergeordneten Automationsgerät in Wirkverbindung zu treten.

14. Werkstückträger nach einem der Ansprüche 1 bis 13, **gekennzeichnet durch**
a. einen Informationsspeicher oder **durch** einen maschinell und/oder drahtlos auslesbaren Informationsspeicher, oder **durch**
b. einen Informationsspeicher oder **durch** einen maschinell und/oder drahtlos auslesbaren Informationsspeicher, wobei in dem Informationsspeicher Informationen bezüglich der Einstellung der Lagerböcke (9, 10) und/oder der Ausrichtung der Tragelemente (2) und/oder der Art der Tragelemente (2) und/oder bezüglich eines aufgenommen Werkstücks (12) abgelegt sind oder ablegbar sind, oder **durch**
c. einen Informationsspeicher oder **durch** einen maschinell und/oder drahtlos auslesbaren Informationsspeicher, der einen RFID-Transponder aufweist.

15. Stapelzelle, die mehrere Werkstückträger nach einem der Ansprüche 1 bis 14 aufweist.

## Claims

1. Workpiece holder with a base part (1) and at least one supporting element (2), wherein the base part (1) has a first rectilinear guide element (3) and a second rectilinear guide element (4) which is spaced apart from the first rectilinear guide element (3), and in that there is at least one first support block (9), which is arranged in a linearly displaceable manner on the first rectilinear guide element (3), and in that there is at least one second support block (10), which is arranged in a linearly displaceable manner on the second rectilinear guide element (4), **characterized in that**
a. the supporting element (2) is connected both to the first support block (9) in a movable manner, namely in a pivotable manner relative to the first rectilinear guide element (3), and to the second support block (10) in a movable manner, namely in a pivotable manner relative to the second rectilinear guide element (4), and/or **in that**
b. the supporting element (2) is connected both to the first support block (9) and to the second support block (10) in such a manner that the support blocks (9, 10) are linearly displaceable independently of each other.

2. Workpiece holder according to Claim 1, **characterized in that**
a. the first rectilinear guide element (3) and the second rectilinear guide element (4) are arranged parallel to each other, and/or **in that**
b. the first rectilinear guide element (3) and the second rectilinear guide element (4) are arranged on two mutually opposite edges of the base part (1), and/or **in that**
c. the base part (1) has two side portions on two mutually opposite edges, wherein the first rectilinear guide element (3) is arranged on a first side portion, and wherein the second rectilinear guide element (4) is arranged on a second side portion, and/or **in that** the first rectilinear guide element (3) has at least one guide rail (5, 6), or **in that**
d. the first rectilinear guide element (3) has two guide rails (5, 6) which are parallel to each other and/or are arranged one above the other, or in that
e. the second rectilinear guide element (4) has at least one guide rail (7, 8), or **in that**
f. the second rectilinear guide element (4) has two guide rails (7, 8) which are parallel to each other and/or are arranged one above the other.

3. Workpiece holder according to Claim 1 or 2, **characterized in that**
a. the supporting element (2) is connected rotatably to the first support block (9) and both rotatably and in a linearly displaceable manner to the second support block (10), or **in that**
b. the supporting element (2) is of elongate design and, at one end, is connected rotatably to the first support block (9) and, at another end, is connected to the second support block (10) both rotatably and in a displaceable manner in the direction of its axis of longitudinal extent.

4. Workpiece holder according to one of Claims 1 to 3, **characterized in that**
a. the supporting element (2) has a first eye (14) which is plugged rotatably onto an, in particular vertically oriented, first pin (13) of the first support block (9), and/or **in that** the supporting element (2) has a first cross-sectionally round eye (14) which is plugged rotatably onto an, in particular vertically oriented, cross-sectionally round, first pin (13) of the first support block (9), and/or **in that** the supporting element (2) has a second eye (14) which is plugged onto an, in particular vertically oriented, second pin (13) of the second support block (10), and/or **in that** the supporting element (2) has a second elongate eye (14) which is plugged onto an, in particular vertically oriented, second pin (13) of the second support block (10), or **in that**
b. the supporting element (2) has an, in particular vertically oriented, first pin which is mounted at least rotatably in a first recess of the first support block, and/or **in that** the supporting element (2) has an, in particular vertically oriented, second pin which is mounted at least rotatably, in particular rotatably and in a displaceable manner in the direction of the axis of longitudinal extent of the supporting element (2) in a second, in particular elongate, recess of the second support block.

5. Workpiece holder according to one of Claims 1 to 4, **characterized in that**
a. the supporting element (2) has at least one, in particular upwardly directed, depression (11) for a workpiece to be supported, or **in that**
b. the supporting element (2) has at least one, in particular vertically oriented, perforation (24) or a series of perforations (24), or **in that**
c. the supporting element (2) has at least one, in particular vertically oriented, perforation (24) or a series of perforations (24), wherein retaining pins are positioned in the perforations, or **in that**
d. the supporting element (2) has a retaining contour (28) and at least one retaining element (27) which is fastenable to the retaining contour and at which a workpiece can be directly or indirectly secured, or **in that**
e. the supporting element (2) has a retaining contour (28) extending along the direction of longitudinal extent, and at least one retaining element (27) which is fastenable to any point of the retaining contour (28) and at which a workpiece can be directly or indirectly secured, or **in that**
f. the supporting element (2) has a retaining contour (28) and at least one retaining element (27) which is fastenable to the retaining contour (28) and at which a workpiece can be directly or indirectly secured, wherein the retaining element (27) is displaceable along the retaining contour (28) before a fixing device is activated, or **in that**
g. the supporting element (2) has a retaining contour (28) and at least one retaining element (27) which is fastenable to the retaining contour (28) and at which a workpiece can be directly or indirectly secured, wherein the retaining element (27) has a clamping device by means of which the retaining element (27) can be fixed to the retaining contour (28) in a re-releasable manner.

6. Workpiece holder according to one of Claims 1 to 5, **characterized in that**
a. the supporting element (2) is of lightweight design, and/or **in that**
b. the supporting element (2) is at least partially produced from sheet metal or from steel sheet or from aluminium sheet or from fibre-reinforced plastic or from carbon-fibre-reinforced plastic, and/or **in that**
c. the supporting element (2) has apertures, and/or in that
d. the supporting element (2) is at least partially produced as a punched sheet metal part, and/or **in that**
e. the supporting element (2) has a wire structure with intersecting wire bars, and/or **in that**
f. the supporting element (2) is at least partially formed by a wire basket, and/or **in that**
g. the base part (1) has a basket or a rectangular frame, or **in that**
h. the base part (1) is at least partially formed by a wire structure, or **in that**
i. the base part (1) is at least partially formed by a wire structure with intersecting wire bars, or in that
j. the base part (1) has a wire basket, or **in that**
k. the base part (1) is at least partially produced from sheet metal or perforated sheet metal.

7. Workpiece holder according to one of Claims 1 to 6, **characterized in that**
a. the first support block (9) has a coupling element which is designed and intended to enter into operative connection with a higher-level automation unit for an adjustment operation in which the first support block (9) is displaced along the first rectilinear guide element (3), and/or **in that**
b. the second support block (10) has a coupling element which is designed and intended to enter into operative connection with a higher-level automation unit for an adjustment operation in which the second support block (10) is displaced along the second rectilinear guide element (4).

8. Workpiece holder according to Claim 7, **characterized in that**
a. the coupling element is designed to enter into operative connection in a form-fitting manner with a higher-level automation unit, or **in that**
b. the coupling element is designed as an, in particular vertical, bore, or **in that**
c. the coupling element is designed as an, in particular vertical, bore in a pin (13) onto which an eye (14) of the supporting element (2) is plugged, or **in that**
d. the coupling element is designed to enter into operative connection by magnetic force with a higher-level automation unit, or **in that**
e. the coupling element has a magnet.

9. Workpiece holder according to one of Claims 1 to 8, **characterized in that**
a. a plurality of first, in particular identical, support blocks (9) are arranged in a linearly displaceable manner on the first rectilinear guide element (3), and **in that** a plurality of second, in particular identical, support blocks (10) are arranged in a linearly displaceable manner on the second rectilinear guide element (4), or **in that**
b. a plurality of first, in particular identical, support blocks (9) are arranged in a linearly displaceable manner on the first rectilinear guide element (3), and **in that** a plurality of second, in particular identical, support blocks (10) are arranged in a linearly displaceable manner on the second rectilinear guide element (4), wherein there are a plurality of supporting elements (2), wherein each supporting element (2) is connected movably at least to one of the first support blocks (9) and to at least one of the second support blocks (10) and/or is connected in such a manner that the respective first support block (9), to which said supporting element is connected, and the at least one second support block (10), to which said supporting element is connected, are linearly displaceable independently of each other.

10. Workpiece holder according to one of Claims 1 to 9, **characterized in that** there is at least one locking device by means of which the respectively rectilinearly adjusted displacement position of the at least one first support block (9) relative to the first rectilinear guide element (3) and/or the respectively rectilinearly adjusted displacement position of the at least one second support block (10) relative to the second rectilinear guide element (4) can be locked, in particular re-releasably.

11. Workpiece holder according to Claim 10, **characterized in that**
a. the locking device has a first locking unit and a second locking unit, wherein the respectively rectilinearly adjusted displacement position of the first support block (9) relative to the first rectilinear guide element (3) can be locked, in particular re-releasably, by means of the first locking unit, and wherein the respectively rectilinearly adjusted displacement position of the second support block (10) relative to the second rectilinear guide element (4) can be locked, in particular re-releasably, by means of the second locking unit, and/or **in that**
b. the locking device has a first locking unit and a second locking unit, wherein the respectively rectilinearly adjusted displacement positions of a plurality of first support blocks (9), in particular of all of the first support blocks (9), relative to the first rectilinear guide element (3) can be locked by means of the first locking unit, and **in that** the respectively rectilinearly adjusted displacement positions of a plurality of second support blocks (10), in particular of all of the second support blocks (10), relative to the second rectilinear guide element (4) can be locked by means of the second locking unit, and/or **in that**
c. a plurality of support blocks (9, 10) can be locked simultaneously with a single locking actuation, and/or **in that** a plurality of locked support blocks (9, 10) can be released simultaneously with a single release actuation.

12. Workpiece holder according to Claim 10 or 11, **characterized in that**
a. the locking device has a rotatably mounted profiled bar (16) which has an outer cross section deviating from a circular shape and which is rotatable either into a locking position, in which it interacts in a locking manner frictionally and/or with a form fit with the support block (9, 10) to be locked, or into a release position, in which it does not interact in a locking manner with the support block (9, 10) to be locked, or **in that**
b. the locking device has a rotatably mounted profiled bar (16) which has an outer cross section deviating from a circular shape and which is rotatable either into a locking position, in which it interacts in a locking manner frictionally and/or with a form fit with the support block (9, 10) to be locked, or into a release position, in which it does not interact in a locking manner with the support block (9, 10) to be locked, wherein the profiled bar (16) runs through a passage (15) with an inner cross section, which deviates from a circular shape, of the support block (9, 10) to be locked or which runs through a respective passage (15), which has an inner cross section deviating from a circular shape, of a plurality of support blocks (9, 10) to be locked, and **in that** the profiled bar (16) interacts in a locking manner frictionally and/or with a form fit with the passage (15) in the locking position, and does not interact in a locking manner with the passage (15) in the release position, or **in that**
c. the locking device has a rotatably mounted profiled bar (16) which has an outer cross section deviating from a circular shape and which is rotatable either into a locking position, in which it interacts in a locking manner frictionally and/or with a form fit with the support block (9, 10) to be locked, or into a release position, in which it does not interact in a locking manner with the support block (9, 10) to be locked, wherein the profiled bar (16) is arranged next to the support block (9, 10) to be locked and lies in a locking manner frictionally and/or with a form fit against the support block (9, 10) in the locking position and does not lie against the support block (9, 10) in the release position, or in that
d. the locking device has an expandable tube (26) which, for locking the support block (9, 10), can be acted upon from the inside with an increased gas pressure, in particular air pressure, such that it expands and locks the support block (9, 10) with a form fit and/or frictionally, or **in that**
e. the locking device has an expandable tube (36) which, for locking the support block (9, 10), can be acted upon from the inside with an increased gas pressure, in particular air pressure, and which extends through a passage (15) of the support block (9, 10) to be locked, or **in that**
f. the first support block (9) has a dedicated first locking component (37) which, independently of a locking position of other locking components (37) of other first or second support blocks (9, 10), can be transferred either into a locking position or a release position, wherein the first locking component in the locking position interacts frictionally and/or with a form fit with the first rectilinear guide element (3) and/or with a profiled bar (38) running parallel to the first rectilinear guide element (3), or **in that**
g. the second support block (10) has a dedicated second locking component which, independently of a locking position of other locking components (37) of other first or second support blocks (9, 10), can be transferred either into a locking position or a release position, wherein the second locking component in the locking position interacts frictionally and/or with a form fit with the second rectilinear guide element (4) and/or with a profiled bar running parallel to the second rectilinear guide element (4), or **in that**
h. each first support block (9) has a dedicated first locking component (37) which, independently of a locking position of other locking components (37) of other first or second support blocks (9, 10), can be transferred either into a locking position or a release position, wherein the first locking component (37) in the locking position interacts frictionally and/or with a form fit with the first rectilinear guide element (3) and/or with a profiled bar (38) running parallel to the first rectilinear guide element (3), or **in that**
i. each second support block (10) has a dedicated second locking component which, independently of a locking position of other locking components of other first or second support blocks (9, 10), can be transferred either into a locking position or a release position, wherein the second locking component in the locking position interacts frictionally and/or with a form fit with the second rectilinear guide element (4) and/or with a profiled bar running parallel to the second rectilinear guide element (4).

13. Workpiece holder according to Claim 12, **characterized in that**
a. the passage (15) and/or the profiled bar (16) and/or the support block (9, 10) have/has an elastic surface, and/or **in that**
b. an actuating element (20) is arranged on the profiled bar (16), in particular on the end side, and/or **in that**
c. an actuating element (20) is arranged on the profiled bar (16), in particular on the end side, said actuating element (20) being designed and intended to enter into operative connection with a higher-level automation unit for a switching-over operation from the release position into the locking position and/or from the locking position into the release position.

14. Workpiece holder according to one of Claims 1 to 13, **characterized by**
a. an information memory or by an information memory which can be read by machine and/or wirelessly, or by
b. an information memory or by an information memory which can be read by machine and/or wirelessly, wherein information regarding the adjustment of the support blocks (9, 10) and/or the orientation of the supporting elements (2) and/or the type of supporting elements (2) and/or regarding a workpiece (12) that has been received is stored or can be stored in the information memory, or by
c. an information memory or by an information memory which can be read by machine and/or wirelessly and which has an RFID transponder.

15. Stacked cell which has a plurality of workpiece carriers according to one of Claims 1 to 14.

## Revendications

1. Porte-pièce comprenant une partie de base (1) et au moins un élément de support (2), la partie de base (1) présentant un premier élément de guidage rectiligne (3) et un deuxième élément de guidage rectiligne (4) espacé du premier élément de guidage rectiligne (3), et au moins un premier bloc-palier (9) étant prévu, lequel est disposé de manière à pouvoir coulisser linéairement sur le premier élément de guidage rectiligne (3), et au moins un deuxième bloc-palier (10) étant prévu, lequel est disposé de manière à pouvoir coulisser linéairement sur le deuxième élément de guidage rectiligne (4),
**caractérisé en ce que**
a. l'élément de support (2) est relié au premier bloc-palier (9) de manière déplaçable, à savoir de manière à pouvoir pivoter par rapport au premier élément de guidage rectiligne (3), et est également relié au deuxième bloc-palier (10) de manière déplaçable, à savoir de manière à pouvoir pivoter par rapport au deuxième élément de guidage rectiligne (4), et/ou **en ce que**
b. l'élément de support (2) est relié au premier bloc-palier (9) ainsi qu'au deuxième bloc-palier (10) de telle sorte que les blocs-paliers (9, 10) puissent coulisser linéairement indépendamment l'un de l'autre.

2. Porte-pièce selon la revendication 1, **caractérisé en ce que**
a. le premier élément de guidage rectiligne (3) et le deuxième élément de guidage rectiligne (4) sont disposés parallèlement l'un à l'autre, et/ou **en ce que**
b. le premier élément de guidage rectiligne (3) et le deuxième élément de guidage rectiligne (4) sont disposés au niveau de deux bords mutuellement opposés de la partie de base (1), et/ou **en ce que**
c. la partie de base (1) présente, au niveau de deux bords mutuellement opposés, deux portions latérales, le premier élément de guidage rectiligne (3) étant disposé au niveau d'une première portion latérale et le deuxième élément de guidage rectiligne (4) étant disposé au niveau d'une deuxième portion latérale, et/ou **en ce que** le premier élément de guidage rectiligne (3) présente au moins un rail de guidage (5, 6) ou **en ce que**
d. le premier élément de guidage rectiligne (3) présente deux rails de guidage (5, 6) disposés parallèlement l'un à l'autre et/ou l'un au-dessus de l'autre, ou **en ce que**
e. le deuxième élément de guidage rectiligne (4) présente au moins un rail de guidage (7, 8), ou en ce que
f. le deuxième élément de guidage rectiligne (4) présente deux rails de guidage (7, 8) disposés parallèlement l'un à l'autre et/ou l'un au-dessus de l'autre.

3. Porte-pièce selon la revendication 1 ou 2, **caractérisé en ce que**
a. l'élément de support (2) est relié de manière déplaçable en rotation avec le premier bloc-palier (9) et à la fois de manière déplaçable en rotation et également de manière à pouvoir coulisser linéairement avec le deuxième bloc-palier (10), ou **en ce que**
b. l'élément de support (2) est réalisé sous forme allongée et est relié au niveau d'une extrémité avec le premier bloc-palier (9) de manière déplaçable en rotation, et au niveau d'une autre extrémité avec le deuxième bloc-palier (10) à la fois de manière déplaçable en rotation et de manière à pouvoir coulisser dans la direction de son axe d'étendue longitudinale.

4. Porte-pièce selon l'une quelconque des revendications 1 à 3, **caractérisé en ce que**
a. l'élément de support (2) présente un premier œillet (14) qui est enfoncé de manière rotative sur un premier tourillon (13), notamment orienté verticalement, du premier bloc-palier (9), et/ou **en ce que** l'élément de support (2) présente un premier œillet (14) de section transversale ronde circulaire, qui est enfoncé de manière rotative sur un premier tourillon (13) de section transversale ronde circulaire, notamment orienté verticalement, du premier bloc-palier (9), et/ou **en ce que** l'élément de support (2) présente un deuxième œillet (14) qui est enfoncé sur un deuxième tourillon (13), notamment orienté verticalement, du deuxième bloc-palier (10), et/ou **en ce que** l'élément de support (2) présente un deuxième œillet allongé (14) qui est enfoncé sur un deuxième tourillon (13), notamment orienté verticalement, du deuxième bloc-palier (10), ou **en ce que**
b. l'élément de support (2) présente un premier tourillon, notamment orienté verticalement, qui est supporté au moins de manière rotative dans un premier évidement du premier bloc-palier, et/ou **en ce que** l'élément de support (2) présente un deuxième tourillon, notamment orienté verticalement, qui est supporté dans un deuxième évidement, notamment allongé, du deuxième bloc-palier, au moins de manière rotative, en particulier de manière rotative et de manière à pouvoir coulisser dans la direction de l'axe d'étendue longitudinale de l'élément de support (2).

5. Porte-pièce selon l'une quelconque des revendications 1 à 4, **caractérisé en ce que**
a. l'élément de support (2) présente au moins un creux (11), notamment orienté vers le haut, pour une pièce à porter, ou **en ce que**
b. l'élément de support (2) présente au moins un perçage (24), notamment orienté verticalement, ou une rangée de perçages (24), ou **en ce que**
c. l'élément de support (2) présente au moins un perçage (24), notamment orienté verticalement, ou une rangée de perçages (24), des goupilles de retenue étant positionnées dans les perçages, ou **en ce que**
d. l'élément de support (2) présente un contour de retenue (28) et au moins un élément de retenue (27) pouvant être fixé au contour de retenue, sur lequel une pièce peut être fixée directement ou indirectement, ou **en ce que**
e. l'élément de support (2) présente un contour de retenue (28) s'étendant le long de la direction d'étendue longitudinale et au moins un élément de retenue (27) pouvant être fixé à un endroit quelconque du contour de retenue (28), sur lequel une pièce peut être fixée de manière directe ou indirecte, ou **en ce que**
f. l'élément de support (2) présente un contour de retenue (28) et au moins un élément de retenue (27) pouvant être fixé au contour de retenue (28), sur lequel une pièce peut être fixée de manière directe ou indirecte, l'élément de retenue (27) pouvant coulisser le long du contour de retenue (28) avant l'activation d'un dispositif de fixation, ou **en ce que**
g. l'élément de support (2) présente un contour de retenue (28) et au moins un élément de retenue (27) pouvant être fixé au contour de retenue (28), sur lequel une pièce peut être fixée de manière directe ou indirecte, l'élément de retenue (27) présentant un dispositif de serrage au moyen duquel l'élément de retenue (27) peut être fixé au contour de retenue (28) de manière à nouveau détachable.

6. Porte-pièce selon l'une quelconque des revendications 1 à 5, **caractérisé en ce que**
a. l'élément de support (2) est réalisé avec une construction légère, et/ou **en ce que**
b. l'élément de support (2) est fabriqué au moins en partie en tôle ou en tôle d'acier ou en tôle d'aluminium ou en plastique renforcé par des fibres ou en plastique renforcé par des fibres de carbone, et/ou **en ce que**
c. l'élément de support (2) présente des orifices, et/ou **en ce que**
d. l'élément de support (2) est fabriqué au moins en partie sous forme de pièce estampée en tôle et/ou **en ce que**
e. l'élément de support (2) présente une structure en fil métallique avec des liens en fils métalliques s'intersectant, et/ou **en ce que**
f. l'élément de support (2) est formé au moins en partie par un panier en fil métallique, et/ou en ce que
g. la partie de base (1) présente un panier ou un cadre rectangulaire, ou **en ce que**
h. la partie de base (1) est formée au moins en partie par une structure en fil métallique, ou en ce que
i. la partie de base (1) est formée au moins en partie par une structure en fil métallique avec des liens en fils métalliques s'intersectant, ou **en ce que**
j. la partie de base (1) présente un panier en fil métallique, ou **en ce que**
k. la partie de base (1) est fabriquée au moins en partie en tôle ou en tôle perforée.

7. Porte-pièce selon l'une quelconque des revendications 1 à 6, **caractérisé en ce que**
a. le premier bloc-palier (9) présente un élément d'accouplement qui est réalisé et prévu pour entrer en liaison fonctionnelle avec un appareil automate supérieur pour une opération de réglage dans laquelle le premier bloc-palier (9) est coulissé le long du premier élément de guidage rectiligne (3), et/ou **en ce que**
b. le deuxième bloc-palier (10) présente un élément d'accouplement qui est réalisé et prévu pour entrer en liaison fonctionnelle avec un appareil automate supérieur pour une opération de réglage dans laquelle le deuxième bloc-palier (10) est coulissé le long du deuxième élément de guidage rectiligne (4).

8. Porte-pièce selon la revendication 7, **caractérisé en ce que**
a. l'élément d'accouplement est réalisé de manière à entrer en liaison fonctionnelle par engagement par correspondance de formes avec un appareil automate supérieur ou **en ce que**
b. l'élément d'accouplement est réalisé sous forme d'alésage notamment vertical, ou **en ce que**
c. l'élément d'accouplement est réalisé sous forme d'alésage notamment vertical, dans un tourillon (13) sur lequel est enfoncé un œillet (14) de l'élément de support (2), ou **en ce que**
d. l'élément d'accouplement est réalisé de manière à entrer en liaison fonctionnelle par une force magnétique avec un appareil automate supérieur, ou **en ce que**
e. l'élément d'accouplement présente un aimant.

9. Porte-pièce selon l'une quelconque des revendications 1 à 8, **caractérisé en ce que**
a. plusieurs premiers blocs-paliers (9), notamment identiques, sont disposés de manière à pouvoir coulisser linéairement sur le premier élément de guidage rectiligne (3), et **en ce que** plusieurs deuxièmes blocs-paliers (10), notamment identiques, sont disposés de manière à pouvoir coulisser linéairement sur le deuxième élément de guidage rectiligne (4), ou en ce que
b. plusieurs premiers blocs-paliers (9), notamment identiques, sont disposés de manière à pouvoir coulisser linéairement sur le premier élément de guidage rectiligne (3), et **en ce que** plusieurs deuxièmes blocs-paliers (10), notamment identiques, sont disposés de manière à pouvoir coulisser linéairement sur le deuxième élément de guidage rectiligne (4), plusieurs éléments de support (2) étant prévus, chaque élément de support (2) étant relié de manière déplaçable au moins à l'un des premiers blocs-paliers (9) et à au moins l'un des deuxièmes blocs-paliers (10) et/ou étant relié de telle sorte que le premier bloc-palier (9) respectif avec lequel il est relié, et l'au moins un deuxième bloc-palier (10) avec lequel il est relié, puissent coulisser linéairement indépendamment l'un de l'autre.

10. Porte-pièce selon l'une quelconque des revendications 1 à 9, **caractérisé en ce qu'**au moins un dispositif de blocage est prévu, au moyen duquel la position de déplacement rectiligne ajustée respective de l'au moins un premier bloc-palier (9) par rapport au premier élément de guidage rectiligne (3) et/ou la position de déplacement rectiligne ajustée respective de l'au moins un deuxième bloc-palier (10) par rapport au deuxième élément de guidage rectiligne (4) peuvent être bloquées, notamment de manière à nouveau libérable.

11. Porte-pièce selon la revendication 10, **caractérisé en ce que**
a. le dispositif de blocage présente une première unité de blocage et une deuxième unité de blocage, la position de déplacement rectiligne ajustée respective du premier bloc-palier (9) par rapport au premier élément de guidage rectiligne (3) pouvant être bloquée, notamment de manière à nouveau libérable, au moyen de la première unité de blocage, et la position de déplacement rectiligne ajustée respective du deuxième bloc-palier (10) par rapport au deuxième élément de guidage rectiligne (4) pouvant être bloquée, notamment de manière à nouveau libérable, au moyen de la deuxième unité de blocage, et/ou **en ce que**
b. le dispositif de blocage présente une première unité de blocage et une deuxième unité de blocage, les positions de déplacement rectiligne ajustées respectives de plusieurs premiers blocs-paliers (9), en particulier de tous les premiers blocs-paliers (9), par rapport au premier élément de guidage rectiligne (3) pouvant être bloquées au moyen de la première unité de blocage, et les positions de déplacement rectiligne ajustées respectives de plusieurs deuxièmes blocs-paliers (10), en particulier de tous les deuxièmes blocs-paliers (10), par rapport au deuxième élément de guidage rectiligne (4) pouvant être bloquées au moyen de la deuxième unité de blocage, et/ou **en ce que**
c. plusieurs blocs-paliers (9, 10) peuvent être bloqués simultanément au moyen d'un actionnement de blocage unique et/ou **en ce que** plusieurs blocs-paliers bloqués (9, 10) peuvent être libérés simultanément avec un actionnement de libération unique.

12. Porte-pièce selon la revendication 10 ou 11, **caractérisé en ce que**
a. le dispositif de blocage présente une barre profilée (16) supportée de manière rotative, qui présente une section transversale extérieure s'écartant d'une forme circulaire et qui peut tourner de manière sélective dans une position de blocage dans laquelle elle coopère par engagement par friction et/ou par correspondance de formes avec blocage avec le bloc-palier (9, 10) à bloquer, ou dans une position de libération dans laquelle elle coopère sans blocage avec le bloc-palier (9, 10) à bloquer, ou **en ce que**
b. le dispositif de blocage présente une barre profilée (16) supportée de manière rotative, qui présente une section transversale extérieure s'écartant d'une forme circulaire et qui peut tourner de manière sélective dans une position de blocage dans laquelle elle coopère par engagement par friction et/ou par correspondance de formes avec blocage avec le bloc-palier (9, 10) à bloquer, ou dans une position de libération dans laquelle elle coopère sans blocage avec le bloc-palier (9, 10) à bloquer, la barre profilée (16) s'étendant à travers un passage (15) ayant une section transversale intérieure, s'écartant de la forme circulaire, du bloc-palier (9, 10) à bloquer, ou s'étendant à travers un passage (15) respectif qui présente une section transversale intérieure s'écartant de la forme circulaire, de plusieurs blocs-paliers (9, 10) à bloquer, et **en ce que** la barre profilée (16) coopère, dans la position de blocage, par engagement par friction et/ou par coopération de formes avec blocage avec le passage (15), et coopère, dans la position de libération, avec le passage (15) sans blocage, ou **en ce que**
c. le dispositif de blocage présente une barre profilée (16) supportée de manière rotative, qui présente une section transversale extérieure s'écartant de la forme circulaire et qui peut tourner de manière sélective dans une position de blocage dans laquelle elle coopère par engagement par friction et/ou par correspondance de formes avec blocage avec le bloc-palier (9, 10) à bloquer, ou dans une position de libération dans laquelle elle coopère sans blocage avec le bloc-palier (9, 10) à bloquer, la barre profilée (16) étant disposée à côté du bloc-palier (9, 10) à bloquer et s'appliquant dans la position de blocage par engagement par friction et/ou par coopération de formes avec blocage contre le bloc-palier (9, 10), et, dans la position de libération, ne s'appliquant pas contre le bloc-palier (9, 10), ou **en ce que**
d. le dispositif de blocage présente un tuyau souple extensible (26) qui, pour bloquer le bloc-palier (9, 10), peut être sollicité depuis l'intérieur avec une pression de gaz accrue, en particulier une pression d'air, de telle sorte qu'il se dilate et bloque le bloc-palier (9, 10) par engagement par correspondance de formes et/ou par friction, ou **en ce que**
e. le dispositif de blocage présente un tuyau souple extensible (36) qui, pour bloquer le bloc-palier (9, 10), peut être sollicité depuis l'intérieur avec une pression de gaz accrue, en particulier une pression d'air, et qui s'étend à travers un passage (15) du bloc-palier (9, 10) à bloquer, ou **en ce que**
f. le premier bloc-palier (9) présente un premier composant de blocage propre (37) qui, indépendamment d'une position de blocage d'autres composants de blocage (37) d'autres premiers ou deuxièmes blocs-paliers (9, 10), peut être transféré de manière sélective dans une position de blocage ou dans une position de libération, le premier composant de blocage, dans la position de blocage, coopérant par engagement par friction et/ou par coopération de formes avec le premier élément de guidage rectiligne (3) et/ou avec une barre profilée (38) s'étendant parallèlement au premier élément de guidage rectiligne (3), ou **en ce que**
g. le deuxième bloc-palier (10) présente un deuxième composant de blocage propre qui, indépendamment d'une position de blocage d'autres composants de blocage (37) d'autres premiers et deuxièmes blocs-paliers (9, 10), peut être transféré de manière sélective dans une position de blocage ou dans une position de libération, le deuxième composant de blocage, dans la position de blocage, coopérant par engagement par friction et/ou par correspondance de formes avec le deuxième élément de guidage rectiligne (4) et/ou avec une barre profilée s'étendant parallèlement au deuxième élément de guidage rectiligne (4), ou en ce que
h. chaque premier bloc-palier (9) présente un premier composant de blocage propre (37) qui, indépendamment d'une position de blocage d'autres composants de blocage (37) d'autres premiers ou deuxièmes blocs-paliers (9, 10), peut être transféré de manière sélective dans une position de blocage ou dans une position de libération, le premier composant de blocage (37), dans la position de blocage, coopérant par engagement par friction et/ou par coopération de formes avec le premier élément de guidage rectiligne (3) et/ou avec une barre profilée (38) s'étendant parallèlement au premier élément de guidage rectiligne (3), ou en ce que
i. chaque deuxième bloc-palier (10) présente un deuxième composant de blocage propre qui, indépendamment d'une position de blocage d'autres composants de blocage d'autres premiers ou deuxièmes blocs-paliers (9, 10), peut être transféré de manière sélective dans une position de blocage ou dans une position de libération, le deuxième composant de blocage, dans la position de blocage, coopérant par engagement par friction et/ou par coopération de formes avec le deuxième élément de guidage rectiligne (4) et/ou avec une barre profilée s'étendant parallèlement au deuxième élément de guidage rectiligne (4).

13. Porte-pièce selon la revendication 12, **caractérisé en ce que**
a. le passage (15) et/ou la barre profilée (16) et/ou le bloc-palier (9, 10) présentent une surface élastique, et/ou **en ce que**
b. un élément d'actionnement (20) est disposé au niveau de la barre profilée (16), en particulier du côté frontal, et/ou **en ce que**
c. un élément d'actionnement (20) est disposé au niveau de la barre profilée (16), en particulier du côté frontal, lequel est réalisé et prévu pour entrer en liaison fonctionnelle avec un appareil automate supérieur en vue d'une opération de commutation de la position de libération à la position de blocage et/ou de la position de blocage à la position de libération.

14. Porte-pièce selon l'une quelconque des revendications 1 à 13, **caractérisé par**
a. une mémoire d'information ou une mémoire d'information lisible par machine et/ou sans fil, ou par
b. une mémoire d'information ou une mémoire d'information lisible par machine et/ou sans fil, des informations concernant l'ajustement des blocs-paliers (9, 10) et/ou l'orientation des éléments de support (2) et/ou le type des éléments de support (2) et/ou concernant une pièce reçue (12) étant ou pouvant être enregistrées dans la mémoire d'information, ou par
c. une mémoire d'information ou par une mémoire d'information lisible par machine et/ou sans fil qui présente un transpondeur RFID.

15. Cellule d'empilement qui présente plusieurs portes-pièces selon l'une quelconque des revendications 1 à 14.
